# EUROPÄISCHE PATENTSCHRIFT

(11) **EP 3 376 910 B1**
(45) Veröffentlichungstag und Bekanntmachung des Hinweises auf die Patenterteilung: **08.07.2020**
(21) Anmeldenummer: 16829226.6
(22) Anmeldetag: 18.11.2016
(51) Int. Cl.: A47F 10/02, A47B 88/969

(54) **SCHUBLADE ZUR LAGERUNG VON STÜCKGUT, EINE LAGERVORRICHTUNG MIT EINER SCHUBLADE SOWIE ZUGEHÖRIGES VERFAHREN**
DRAWER FOR STORING PIECE GOODS, A STORAGE DEVICE WITH A DRAWER AND ASSOCIATED METHOD
TIROIR DE STOCKAGE D'UN PRODUIT EN VRAC, DISPOSITIF DE STOCKAGE MUNI D'UN TIROIR ET PROCÉDÉ AFFÉRENT

(30) Priorität: 18.11.2015 DE 102015120000
(43) Veröffentlichungstag der Anmeldung: 26.09.2018
(73) Patentinhaber: Adolf Würth GmbH & Co. KG, 74653 Künzelsau (DE); Würth International AG, 7000 Chur (CH)
(72) Erfinder: WITTIG, Klaus, 74613 Öhringen (DE)
(74) Vertreter: Dilg, Haeusler, Schindelmann Patentanwaltsgesellschaft mbH
(86) Internationale Anmeldenummer: PCT/DE2016/000405
(87) Internationale Veröffentlichungsnummer: WO 2017/084650

(56) Entgegenhaltungen:
- WO-A2-2008/001019
- WO-A2-2010/017530
- US-A- 5 745 366
- US-A1- 2012 253 510

## Beschreibung

Die Erfindung betrifft eine Schublade, eine Lagervorrichtung mit einer Schublade ein Verfahren zum Initialisieren der Lagervorrichtung sowie ein Verfahren zum Betreiben der Lagervorrichtung.

Um den Anforderungen einer zeitgemäßen und damit anspruchsvollen Logistik gerecht zu werden, ist es heutzutage notwendig, die dafür verwendeten Lagervorrichtungen intelligent auszustatten und in übergeordnete Gesamtsysteme einzubinden.

Generell sind bereits einige Ansätze für automatisierte Lagersysteme mit automatischen Erfassungsvorrichtungen bekannt.

Die DE 10 2007 017 207 A1 beschreibt einen Sensor für eine Belegerkennung und offenbart dabei eine Schublade mit einem Schaumstoffnormteil und Ausnehmungen zur Aufnahme von Werkzeugen. Am Grund einer Ausnehmung befindet sich ein als Reflexlichtschranke ausgebildeter Sensor und umfasst dabei einen Lichtsender und einen in unmittelbarer Nähe angeordneten Empfänger. Je nachdem, ob sich ein Werkzeug in der Ausnehmung befindet oder nicht, wird das emittierte Licht reflektiert oder nicht, so dass der Empfänger nur dann ein Signal erzeugt, wenn ein Werkzeug in der Ausnehmung vorhanden ist.

Die DE 197 14 799 C2 zeigt eine Vorrichtung zum Lagern von Wareneinheiten mit einer am Boden einer Warenablage angeordneten Matrix aus Sensoren und entsprechenden Signalleitungen, wobei die Signalleitungen im Bereich der Warenablage von einem Leiterplattenstreifen gebildet werden, auf dem auch die Sensoren montiert sind, wobei die Sensoren Drucksensoren, kapazitive / induktive Sensoren oder mechanische Schalter sind.

Aus der US 5,328,169 ist ein Fotokopiergerät bekannt, der erstellte Kopien in verschiedene Fächer, die übereinander schräg angeordnet sind, einordnet. Am unteren Ende jedes Fachs sind sowohl eine Leuchtdiode als ein Lichtsensor voneinander beabstandet angeordnet, wobei die unter dem jeweiligen Fach angeordnete Leuchtdiode durch ein Loch in dem jeweiligen Fach in den Lichtsensor des darüber angeordneten Fachs strahlt. Eine zugeordnete Elektronik erkennt aus dem Vorliegen eines Signals an der Leuchtdiode, ob Papier zwischen der Leuchtdiode und dem Lichtsensor angeordnet ist: Liegt ein Signal vor, befindet sich kein Papier in dem Fach. Liegt kein Signal vor, ist der Lichtstrahl unterbrochen und es liegt Papier im Fach. Dadurch, dass die Leuchtdiode und der Lichtsensor in Höhenrichtung des Fachs getrennt angeordnet sind, ergibt sich eine relativ große Baugröße. Mit der beschriebenen Anordnung kann nur festgestellt werden, ob Papier am unteren Ende des jeweiligen Fachs aufliegt.

Nachteile dieser Lösungen sind allgemein die Verwendung vertikal wirkender Sensoren und zu deren Verwendung ein größerer Platzbedarf.

US 5 745 366 A offenbart Vorrichtungen zur Verfügung, um Zugang zu auszugebenden Gegenständen zu ermöglichen und einen Bestand der Gegenstände zu führen. Es wird eine Abgabeeinheit bereitgestellt, die eine Umhüllung mit einem Innenraum aufweist. Eine Vielzahl von Speicherorte sind über eine Oberfläche des Gehäuses verteilt. Sensoren sind vorgesehen, die assoziiert sind mit zumindest einigen der einzelnen Speicherorte. Die Einheit umfasst ferner eine Vielzahl von Behältern, die in mindestens einigen der Speicherstellen angeordnet sind. Sensoren sind vorgesehen, die assoziiert sind mit zumindest einigen der einzelnen Behälter. Ein Prozessor ist an dem Gehäuse angeordnet und verbunden, um Signale von den dem Speicherort zugeordneten Sensoren und den dem Behälter zugeordneten Sensoren zu empfangen.

Aufgabe der Erfindung ist es, eine Vorrichtung zur platzsparenden Lagerung von Stückgut mit einer variablen und einfach anpassbaren Raumaufteilung sowie ein Verfahren zum Betreiben derselben anzugeben, mit der auf einfache Weise das Vorhandensein von Stückgut erfasst werden kann.

Diese Aufgabe wird erfindungsgemäß durch eine Vorrichtung gemäß Anspruch 1 sowie einem Verfahren gemäß den Ansprüchen 11 und 13 gelöst.

Es wird erfindungsgemäß vorgeschlagen, dass zumindest eine Sensorbaugruppe an zumindest einer Seite des Teilbereichs in eine Seitenwand und/oder in ein Trennelement anhand einer Aussparung integriert ist.

Erfindungsgemäß ist, dass die Aussparung eine Einschuböffnung zum Einführen einer Sensorbaugruppe aufweist. Bevorzugt ist, dass auf einer Außenfläche einer Sensorbaugruppe jeweils nur Signalgeber oder Signalempfänger angeordnet sind und/oder dass auf der unbestückten Rückseite der Sensorbaugruppe eine Klebefläche angeordnet ist und/oder dass auf einer Außenfläche einer Sensorbaugruppe Signalgeber und auf der entgegengesetzten Außenfläche Signalempfänger angeordnet sind und/oder dass in der Seitenwand und / oder im Trennelement Signalöffnungen zur Durchleitung der Signale vorhanden sind und/oder dass zumindest eine Seitenwand und / oder zumindest ein Trennelement Fixiervorrichtungen zum Einstecken von Trennelementen aufweist, wobei die Fixiervorrichtungen Kontakte bereitstellen zur elektrischen Anbindung eines eingeschobenen Trennelement zur Stromversorgung sowie zur Durchleitung von Steuerungs- und / oder Datensignalen an die oder von den Sensorbaugruppen.

Weiter ist vorteilhaft, dass ein Datenbussystem zur Weiterleitung der Steuersignale für zumindest eine Sensorbaugruppe, der Signale der Sensorbaugruppe und eine Stromversorgung für die zumindest eine Sensorbaugruppe vorhanden ist.

Es wird vorgeschlagen, dass die Schublade einen Schubladenstecker aufweist, der die Schublade im geschlossenen Zustand mit Stromversorgung und Datenbus verbindet. Vorteilhaft ist, dass eine Steuereinheit zur Entgegennahme, Verarbeitung und Ausgabe von Steuersignalen über den Datenbus von bzw. an die Sensorbaugruppen vorhanden ist. Bevorzugt ist eine Sensorbaugruppe gegenüber anderen Sensorbaugruppen eindeutig identifizierbar.

Weiter wird vorgeschlagen, dass alle Sensorbaugruppen in der Steuereinheit derart verwaltet werden, dass paarweise zusammenwirkende Sensorbaugruppen, Gruppen paarweise zusammenwirkender Signalgeber und Signalempfänger oder zumindest einzeln paarweise zusammenwirkende Signalgeber und Signalempfänger speicherbar und wieder abrufbar sind und individuell zur Abgabe oder Abfrage von Signalen angesteuert werden können.

Bevorzugt ist, dass in der Steuereinheit eine Zuordnung der paarweise zusammenwirkenden Sensorbaugruppen, der Gruppen paarweise zusammenwirkender Signalgeber und Signalempfänger und / oder zumindest einzeln paarweise zusammenwirkende Signalgeber und Signalempfänger zur Schublade und / oder zum Überwachungsraum oder zum Teilbereich erfolgt.

Vorteilhaft ist, dass in der Steuereinheit eine Zuordnung mindestens eines Überwachungsraums oder zumindest eines Teilbereichs zum eingelagerten Stückgut erfolgt, insbesondere um welches Stückgut es sich handelt und eine Bestandsermittlung und -fortschreibung erfolgt.

Bevorzugt ist die Ausführung der Vorrichtung als ein Regal, ein Schrank, ein Werkstattwagen oder ein Rollcontainer.

Es ist möglich und wird vorgeschlagen, dass die Erkennung des zumindest einen gesetzten Trennelements durch schrittweises An- und Abschalten der an einer Stirnseite des Trennelement quer dazu angeordneten Signalgebern und Auswertung der Signale der gegenüberliegenden Signalempfänger erfolgt, indem ein ausgegebenes Signal ohne Behinderung durch ein Trennelement von mehreren gegenüberliegenden und nebeneinander angeordneten Signalempfängern empfangen werden kann, bei einem vorhandenen Trennelement aber nur maximal vom direkt gegenüber und am Trennelement anliegenden Signalempfänger, wodurch eine scharfe Grenze aufgrund gesendeter, aber nicht empfangener Signale feststellbar ist.

Vorteilhaft ist, dass die Belegerkennung durch Aktivieren der zu einem Überwachungsraum oder eines Teilbereichs zugeordneten Signalgeber und Abfrage der Signalempfänger erfolgt, indem ein empfangenes Signal als ein fehlendes Stückgut und ein nicht empfangenes oder nur sehr schwaches Signal als ein vorhandenes Stückgut interpretiert wird.

Weiter ist vorteilhaft, dass die Belegerkennung durch Schalten des Schubladenschalters beim Schließen der Schublade ausgelöst wird.

Weitere Merkmale, Einzelheiten und Vorzüge der Erfindung ergeben sich aus den Schutzansprüchen, deren Wortlaut durch Bezugnahme zum Inhalt der Beschreibung gemacht wird. Ausführungen und Beispiele der Erfindung sind in den Zeichnungen dargestellt und werden in der nachfolgenden Beschreibung näher erläutert.

Hierbei zeigen:
- Fig. 1:: eine perspektivische Ansicht einer Sensorbaugruppe,
- Fig. 2 a-d:: verschiedene Ansichten einer Sensorbaugruppe,
- Fig. 3 a-c:: perspektivische Ansichten möglicher Querschnitte einer Sensorbaugruppe
- Fig. 4 a-e:: Draufsichten auf mögliche Formen einer Sensorbaugruppe,
- Fig. 5:: eine perspektivische Ansicht einer Sensorbaugruppe,
- Fig. 6:: eine perspektivische Ansicht einer Sensorbaugruppe,
- Fig. 7:: Vorderansicht einer Sensorbaugruppe,
- Fig. 8:: Vorderansicht einer Sensorbaugruppe,
- Fig. 9:: Vorderansicht einer Sensorbaugruppe mit einem Teilschnitt,
- Fig. 10:: Seitenansicht einer Sensorbaugruppe,
- Fig. 11: Diagramm möglicher Signale,
- Fig. 12:: Seitenansicht einer Sensorbaugruppe,
- Fig. 13: Draufsicht auf eine Sensorbaugruppe,
- Fig. 14 a,b:: schematische Darstellung eines Sensorsystems,
- Fig. 15 a,b:: Seitenansicht eines Sensorsystems,
- Fig. 16:: Seitenansicht eines Sensorsystems,
- Fig. 17:: Seitenansicht eines Sensorsystems.
- Fig. 18 a-c:: schematische Darstellungen einer Lagervorrichtung,
- Fig. 19 a-d:: schematische Darstellungen einer Lagervorrichtung mit verschiedenen Belegzuständen
- Fig. 20 a-c:: Seitenansichten zur Anordnung einer Sensorbaugruppe an einer Lagervorrichtung
- Fig 21 a,b:: Seitenansicht von Begrenzungselementen
- Fig. 22 a,b:: Seitenansicht und Schnitt eines Begrenzungselements
- Fig. 23 a,b:: perspektivische Darstellungen von Begrenzungselementen,
- Fig. 24 a.b:: perspektivische Darstellungen von Begrenzungselementen,
- Fig. 25:: perspektivische Darstellung eines Begrenzungselements,
- Fig. 26:: perspektivische Darstellung eines Begrenzungselements,
- Fig. 27:: perspektivische Darstellung eines Begrenzungselements,
- Fig. 28 a-c:: perspektivische Darstellung sowie Drauf- und Detailansicht eines Begrenzungselements,
- Fig. 29:: perspektivische Darstellung eines Regalbodens,
- Fig. 30:: perspektivische Darstellung eines Regals,
- Fig. 31 a,b:: Regalboden und Schnitt durch mehrere Regalböden,
- Fig. 32:: perspektivische Darstellung eines Schranks,
- Fig. 33:: perspektivische Darstellung einer Schublade,
- Fig. 34 a.b:: perspektivische Darstellung einer Schublade sowie eine Draufsicht

- Fig. 35:: perspektivische Darstellung eines Regalbodens.

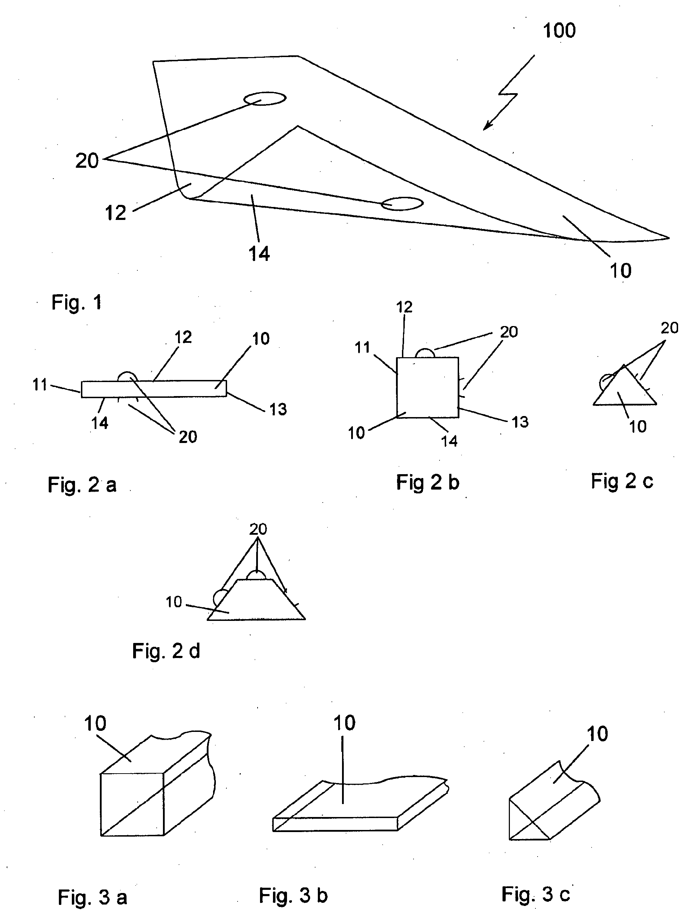

Fig. 1 zeigt eine perspektivische Ansicht einer Sensorbaugruppe 100, die in einem Beispiel mit einem Träger 10 aus einem flexiblen Material hergestellt ist. Man sieht von schräg oben auf die vordere linke Ecke, die hier hochgebogen dargestellt ist und einen Blick sowohl auf die Oberseite 12 als auch auf die Unterseite 14 ermöglicht. Auf der Sensorbaugruppe 100 ist sowohl auf der Ober- als auch auf die Unterseite 12, 14 jeweils zumindest ein Sensorelement 20 angeordnet.

Diese Anordnung ermöglicht der Sensorbaugruppe in 2 Richtungen zu funktionieren (Fig. 2 a). Im Prinzip kann jede der Außenflächen der Sensorbaugruppe mit Sensorelementen ausgestattet werden, so dass eine Sensorbaugruppe in alle 3 Raumachsen jeweils in 2 Richtungen funktionieren könnte. In Fig. 2 b ist eine solche Sensorbaugruppe mit den Sensorelementen zumindest an 2 Seitenfläche 12, 13 in einer Draufsicht dargestellt. Auf die Darstellung von Sensorelementen in den restlichen Seitenwänden 11, 14 sowie den Stirnflächen wurde verzichtet. Eine Sensorbaugruppe wie in Fig. 2 b könnte mit weiteren Baugruppen jeweils um 90° verschwenkt einen Raum an seinen Raumgrenzen überwachen. Eine Sensorbaugruppe gem. Fig. 2 c könnte kombiniert mit weiteren Sensorbaugruppen einen Raum jeweils diagonal überwachen, mit einer Bauform wie in Fig. 2 d auch noch in den direkten Raumachsen.

Dabei kann der Querschnitt einer Sensorbaugruppe mehrere mögliche Formen annehmen (Fig. 3 a-c). Zur Aufnahme entsprechender Sensorelemente sind diejenigen Formen am besten geeignet, die bzgl. der Dimensionen oder der Anzahl der verbauten Sensorelemente eine gerade Fläche zur Verfügung stellen, wozu sich ein Querschnitt mit Ecken am besten eignet.

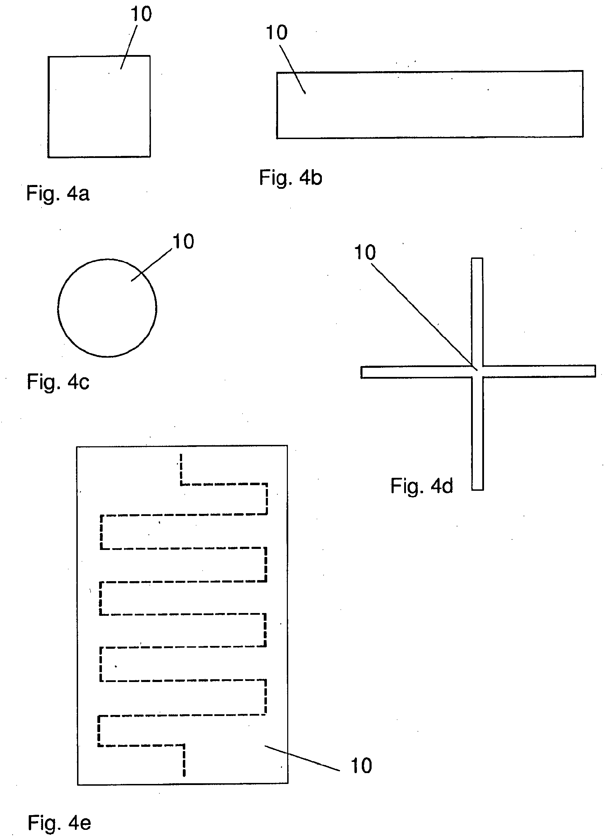

Fig. 4 a-c zeigen die Draufsichten mehrerer möglicher Formen von Sensorbaugruppen zur bestmöglichen Anpassung an den zu überwachenden Raum. Soll die Sensorbaugruppe gegenüber der Bauform des zu überwachenden Raums optimiert werden, so lässt sich die Baugruppe mit einem nicht vollflächigen, aber in einer den Raum dennoch bestmöglich abdeckenden Form herstellen, so z.B. kreuzförmig (Fig. 4 d) oder mäanderförmig (Fig. 4 e), wobei die Sensoren auf der gestrichelten Linie aufgesetzt sein können oder die Form des Trägers ist schmal und folgt der gestrichelten Linie.

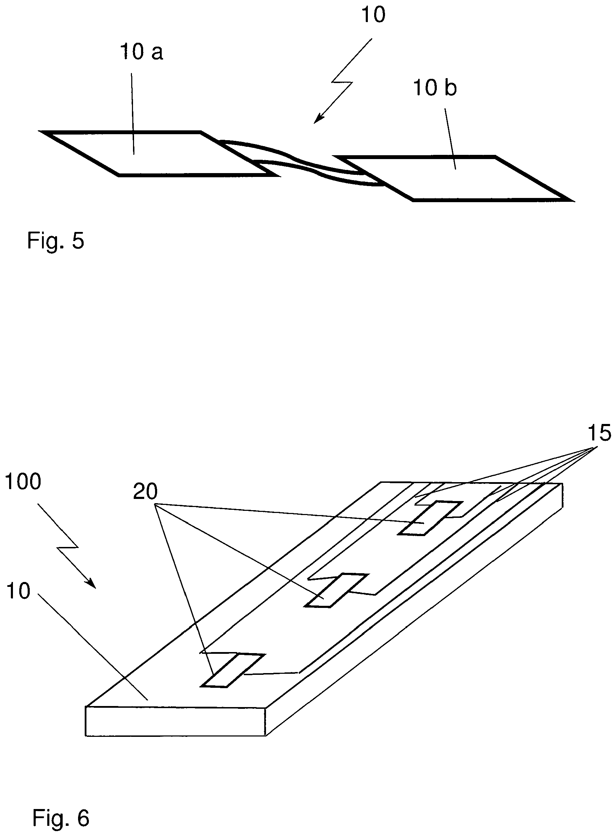

Die Sensorbaugruppe ist in einem Beispiel als flacher Streifen ausgeführt (Fig. 4 b), d.h. die Höhe ist dabei sehr viel geringer als die Breite, wobei die Breite geringer als die Länge ist. Es ist auch möglich eine längere Sensorbaugruppe aus einem Träger 10 mit zwei oder auch aus mehreren Abschnitten 10 a, 10 b, die später die Sensorelemente aufnehmen, zu bilden und die Abschnitte untereinander mit jeweils einem flexiblen Teilabschnitt zu verbinden, wobei der Teilabschnitt insbesondere auch die elektrischen Leitungen für die Stromversorgung und die Signale der Sensorelemente enthält (Fig. 5).

Fig. 6 zeigt eine perspektivische Ansicht einer Sensorbaugruppe 100 in einem Beispiel mit einem streifenförmigen Träger 10. Der Träger 10 kann dabei aus einem starren oder aus einem flexiblen Material hergestellt, oder aber auch aus einem Verbund mehrerer Schichten gleichen oder unterschiedlichen Materials hergestellt sein. Der Träger 10 fungiert in dem Beispiel gleich mit als Leiterplatte und ist mit entsprechenden Leiterbahnen 15 sowie Punkten zur Kontaktierung der Sensorelemente 20 und / oder evtl. weiterer elektrischer Bauteile oder -gruppen ausgestattet. Die Leiterbahnen 15 sowie auch die Kontaktflächen für die Sensoren können direkt auf den Träger oder auch auf einer Folie welche später auf den Träger auflaminiert wird, aufgebracht werden.

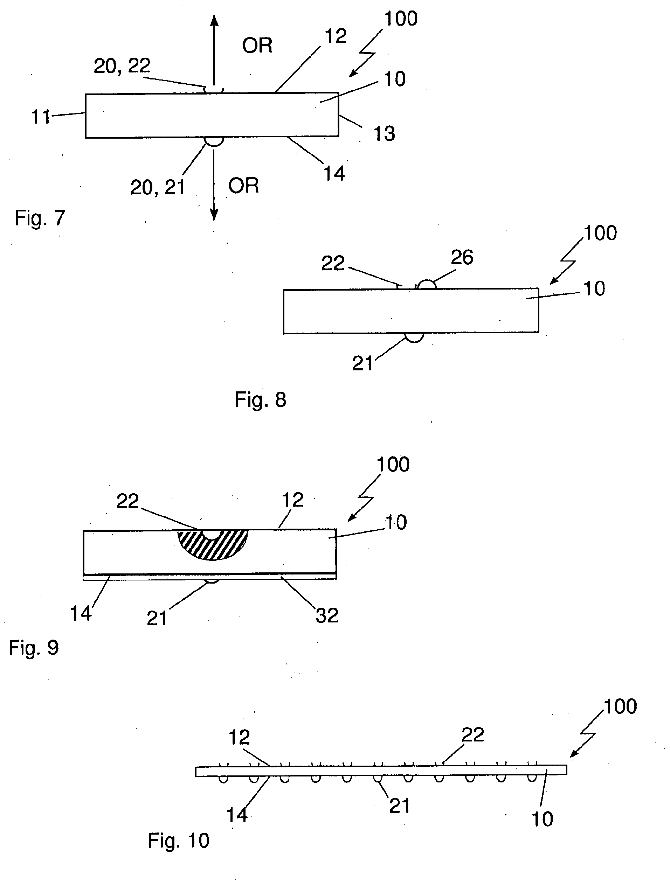

Fig. 7 zeig die Vorderansicht einer Sensorbaugruppe 100 mit jeweils einem auf einer Außenfläche 12, 14 angeordneten Sensorelement 20. Die Sensorelemente 20 sind jeweils als Exemplare einer Art, und zwar als Signalgeber 21 oder als Signalempfänger 22 ausgebildet. Signalgeber und -empfänger sind für Signale einer Art ausgelegt. Nach dem Sender-Empfänger Prinzip können das alle Arten von sende- und empfangsfähigen Signalen sein, insbesondere Lichtsignale, bevorzugt IR-Licht oder akustische Signale, bevorzugt Ultraschallsignale. In den weiteren Ausführungsbeispielen wird von Lichtsignalen ausgegangen. Die Signalgeber 21 sind hier schematisch als Kreise oder geschlossene Halbkreise dargestellt, während die Signalempfänger 22 schematisch als offene Halbkreise bzw. "Schüsseln" mit der Öffnung von der entsprechenden Außenfläche wegzeigend dargestellt sind. Eine Orientierungsrichtung OR für die Sensorelemente 20 ist so zu verstehen, dass von ihrem Mittelpunkt und dem höchsten bzw. tiefsten Punkt der Kreislinie bzgl. der jeweiligen Außenfläche eine Gerade hindurchführt, die die hauptsächliche Aus- oder Eintrittsrichtung der Signale widergibt.

Bei einem weiteren Beispiel ist bei einem Signalempfänger 22 ein Prüfsignalgeber 26 beigeordnet, d.h. In unmittelbarer oder zumindest mittelbarer Entfernung des Signalempfängers 22 (Fig. 8). Damit kann die Funktionssicherheit der Sensorbaugruppe bzw. des übergeordneten Systems verbessern, indem, wenn ein Signal einer ersten gegenüberliegenden Sensorbaugruppe ausgesendet, aber keins empfangen wurde, kann hiermit die Funktionstüchtigkeit des Signalempfänger nochmals überprüft werden. Im Grunde genommen kann dasselbe Prinzip auch auf einen Signalgeber angewendet werden.

Die Sensorelemente können sowohl als Signalgeber 21 als auch als Signalempfänger 22 zumindest teilweise an einer jeweiligen Außenfläche in den Träger 10 integriert sein, um einerseits ein entsprechendes Sensorelement zu schützen oder auch um auch eine glatte Außenseite zu erhalten. In Fig. 9 ist auf einer Außenfläche 12 in einem Teilschnitt ein vollkommen in den Träger 10 integrierter Signalempfänger 22 gezeigt. An der Unterseite 14 erfolgt die Integration des Signalgebers mittels einer auflaminierten weiteren Schicht 32 derart, dass der Signalgeber 21 als zumindest teilweise in den Träger integriert gilt, wobei die Schutzschicht 32 an den entsprechenden Stellen der Position eines Sensorelements 20 Aussparungen aufweist und damit auch die Sensorelemente bzw. die entsprechenden Leiterbahnen schützt oder eine glatte Außenfläche bereitstellt (Fig. 9).

Fig. 10 zeigt eine Seitenansicht einer Sensorbaugruppe 100 mit einer Vielzahl von an einer jeweiligen Außenfläche 12, 14 angeordneten Sensorelementen 21, 22, wobei an einer Außenfläche jeweils nur Sensorelemente einer Art angeordnet sind. Auf diese Weise lassen sich viele Sensorbaugruppe kaskadierend, d.h. In immer eine Richtung orientiert miteinander kombinieren. Der Abstand der Sensorelemente auf jeweils einer Außenfläche untereinander kann so gewählt sein, dass ein Signalgeber immer nur ein Signalempfänger anspricht oder auch mehrere Signalempfänger, indem die Sensorelemente 21, 22 20 so nah beieinander angeordnet sind, dass sich die Signalkegel auf der Empfängerseite überlappen.

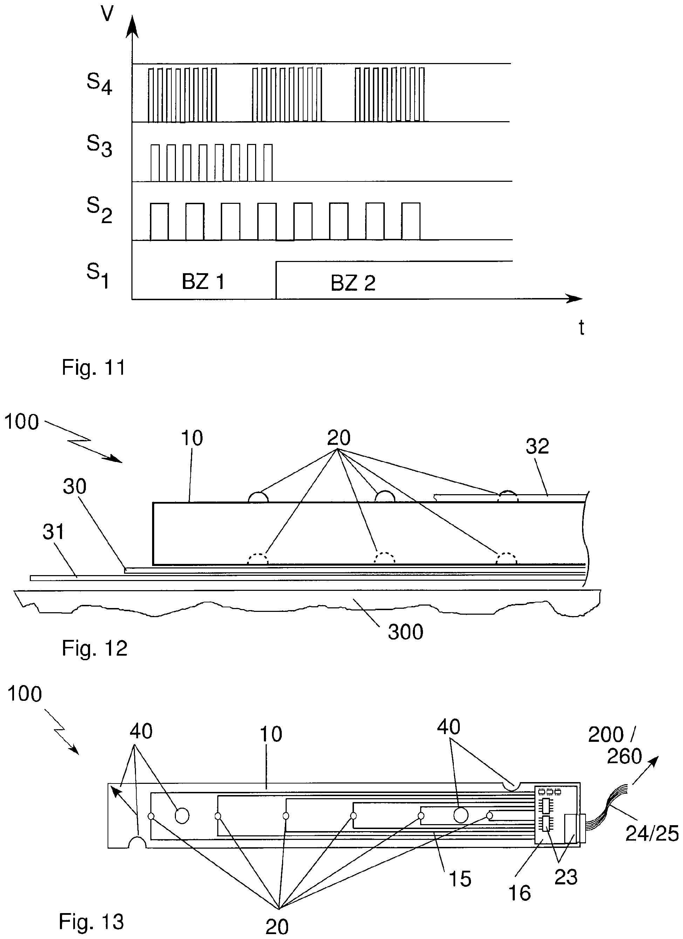

Fig. 11 zeigt ein Diagramm bezüglich mehrerer Signale an. Ein erstes Signal S1 zeigt zwei verschiedene Belegzustände BZ1 und BZ2 an wobei im Belegzustand BZ1 kein Signal S1 empfangen wird und damit als mit einem Lagergut belegter Sensorbereich interpretiert wird, wohingegen im Belegzustand BZ2 ein Signal S1 empfangen wird und damit als ein Sensorbereich ohne ein Lagergut interpretiert wird. Signale S2 - S4 zeigen Signale mit unterschiedlicher Intensität, Modulation oder mit einzelnen Frequenzblöcken. Diese Signale können zur Verbesserung der Signal- bzw. Datenintegrität verwendet werden oder aber auch um, insbesondere bei sich überlappenden Signalkegeln einzelne Sensorelemente anzusprechen oder zu identifizieren.

Fig. 12 zeigt eine Seitenansicht einer Sensorbaugruppe mit wieder einer Vielzahl von an gegenüberliegenden Außenflächen des Trägers 10 angeordneten Sensorelementen 20, wobei die oberen Sensorelemente 20 durch eine Schutzschicht 32 zumindest teilweise in eine Schutzschicht 32 eingebettet sind und somit eine annähernd glatte Oberfläche erreicht wird. Auf der gegenüberliegenden Außenfläche sind die Sensorelemente 20 hingegen vollkommen in den Träger 10 integriert. Auf dieser Unterseite ist eine Klebeschicht 30 aufgebracht die von einer nicht klebenden Deckschicht 31 bedeckt ist. Zumindest die Klebeschicht 30 hat an den Positionen der Sensorelemente 20 entsprechende Aussparungen, um die Sensorelemente 20 nicht zu beschädigen oder zu verunreinigen, und um später die Signale ungehindert passieren zu lassen. Für eine spätere Montage wird die nicht klebende Deckschicht 31 von der Klebeschicht 30 entfernt, und kann so an einer Vorrichtung 300 ausgerichtet und mithilfe der Klebeschicht 30 an der Vorrichtung 300 befestigt werden.

Fig. 13 zeigt in einer Draufsicht eine Sensorbaugruppe 100 mit einem Träger 10 und auf den Träger 10 befindlichen Leiterbahnen 15 sowie an die Leiterbahnen 15 angeschlossenen Sensorelemente 20. Am rechten Ende der Sensorbaugruppe ist eine kleine Starre Leiterplatte angebracht, welche die zur Steuerung der Sensorelemente 20 notwendige Steuerelektronik 16 enthält sowie weitere elektrische oder elektronische Bauteile 23, zum Beispiel ein Steckerelement 23 zur Stromversorgung und Entgegennahme bzw. Ausgabe von Steuersignalen 24 / 25 der Sensorelemente 20 zur Weiterleitung an ein übergeordnetes Sensorsystem 200 bzw. an ein übergeordnetes Steuersystem 260. Die Sensorbaugruppe 100 weist zusätzliche Markierungen bzw. Vorrichtung 40 zur Fixierung an einer Vorrichtung auf, die als optische Markierungen (z.B. als Pfeil) oder als Formen (z.B. Halbkreise, Bohrungen) ausgeführt sind. Insbesondere die Bohrungen können dazu herangezogen werden mit einer Schraube etc. später die Sensorbaugruppe 100 in einer bestimmten Position zu fixieren.

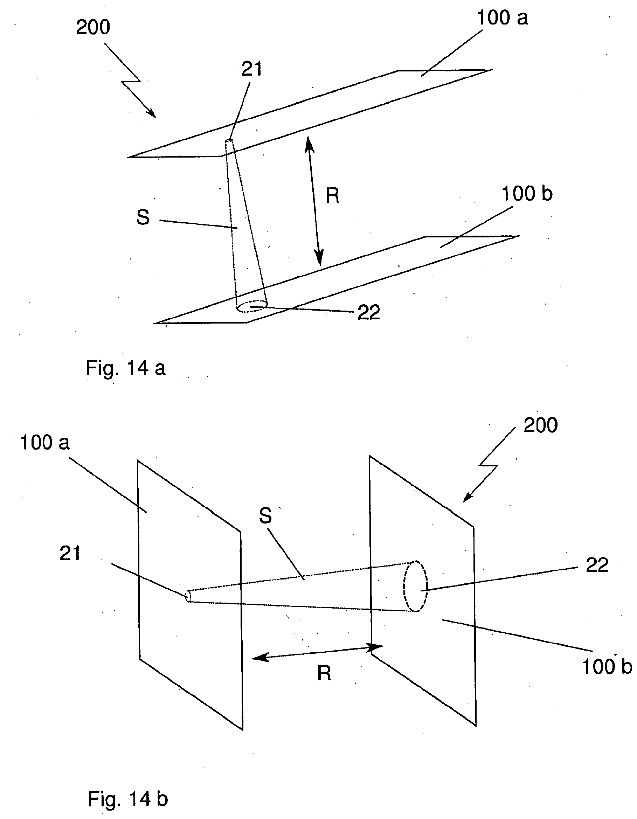

Fig. 14 a zeigt schematisch die Anordnung ein Sensorsystem 200 bestehend aus einem Überwachungsraum R und zwei diesen Raum zumindest teilweise ein - oder umfassende Sensorbaugruppen 100 a, 100 b, wobei sich die Sensorbaugruppen zumindest teilweise einander gegenüber liegen. Die Sensorbaugruppen 100 a, 100 b bzw. die an diesen einander zugewandten Außenflächen befindliche Sensorelemente 21, 22 sind dabei so angeordnet, dass zumindest ein Signalgeber 21 der ersten Sensorbaugruppe 100 a einem Signalempfänger 22 einer zweiten Sensorbaugruppe 100 b annähernd gegenüberliegt, so dass ein vom Signalgeber 21 ausgestrahlte Signal durch den Überwachungsraum R hindurch zum Signalempfänger 22 der zweiten Sensorbaugruppe 100 B gesendet und empfangen werden kann. Eine solche Anordnung kann beliebig im Raum gestaltet sein. Figur 14 b zeigt hier zwei vertikal ausgerichtete Sensorbaugruppen 100 a, 100 b, wobei das Signal S hier horizontal durch ein Überwachungsraum R hindurch gesendet und empfangen wird.

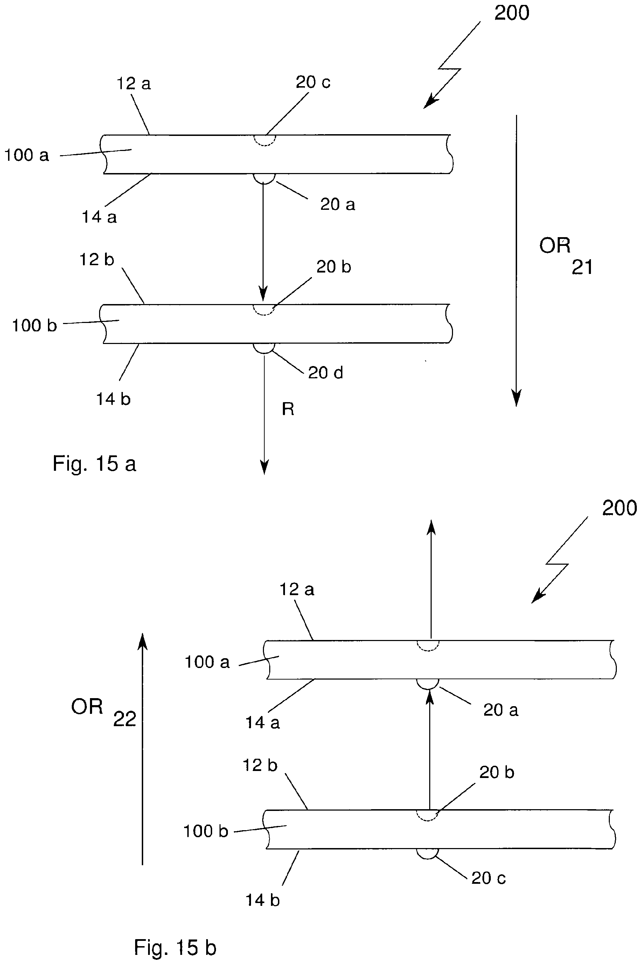

Fig. 15 a zeigt ein Beispiel eines Sensorsystem 200 in einer Seitenansicht mit einer Anordnung von zwei Sensorbaugruppe 100 a, 100 b, wobei die Sensorbaugruppe derart gegenüber einander ausgerichtet sind das an den einander gegenüberliegenden Außenflächen 14 a und 12 b die Sensorelemente 20 a und 20 b miteinander agieren können, d.h. ein von einem Signalsensorelement 20 a ausgesendet Signal S kann von einem zweiten Sensorelement 20 b empfangen werden.

Die Sensorelemente sind dabei derart zueinander positioniert und von ihrer Art her gewählt, so dass sich bei Sensorbaugruppen 100 a, 100 b an ihren einander zugewandten Außenflächen 14 a und 12 b immer jeweils ein Signalgeber 21 und ein Signalempfänger 22 gegenüberliegen (Fig. 15 b). An den jeweils voneinander abgewandten Außenflächen der beiden Sensorbaugruppen 100 a, 100 b sind weitere Sensorelemente angeordnet, die jeweils komplementär zu demjenigen Sensorelement sind, welches auf der jeweiligen Sensorbaugruppe auf der, der anderen Sensorbaugruppe zugewandten Außenfläche liegt. Komplementär heißt hier die jeweils andere Art eines Sensorelements. In Fig. 15 a liegt die Sensorbaugruppe 100 a mit ihrer Außenfläche 14 a mit einem Signalgeber 20 a der Außenfläche 12 b der Sensorbaugruppe 100 b mit einem Signalempfänger 20 b gegenüber. Somit ist auf der, der nicht der Sensorbaugruppe 100 b gegenüberliegenden Außenfläche 12 a das weitere Sensorelement 20 c als Signalempfänger ausgebildet. An der Sensorbaugruppe 100 b ist auf der, der von der Sensorbaugruppe 100 a abgewandten Außenfläche 14 b das weitere Sensorelement 20 d als Signalgeber ausgebildet. Entsprechend sind alle Sensorelemente verschiedener Sensorbaugruppen jeweils einer Art in jeweils eine Richtung OR orientiert, und zwar sind alle Signalgeber in eine erste Richtung OR 21 und alle Signalempfänger in eine zweite Richtung OR 22 orientiert (Fig. 15 b).

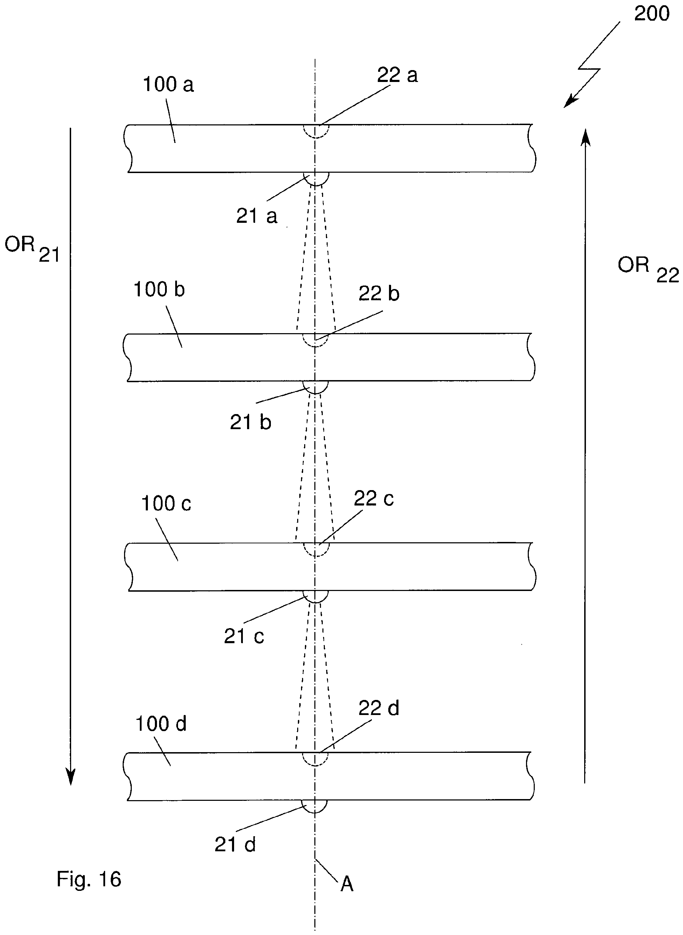

Fig. 16 zeigt ein Sensorsystem 200 in einer Seitenansicht mit vier übereinander angeordneten Sensorbaugruppen 100 a-d, bei der die jeweiligen Signalgeber 21 a-d in eine erste Richtung OR 21 von oben nach unten und jeweils alle Signalempfänger 22 a-d in eine zweite Richtung OR 22 von unten nach oben orientiert sind. Auf diese Art ist es möglich mehrere baugleiche Sensorbaugruppen in einem gesamten Sensorsystem effizient anzuordnen und miteinander kaskadierend zu kombinieren. Dabei liegen miteinander agierende Sensorelemente zumindest zweier benachbarter Sensorbaugruppen auf einer gemeinsamen Achse A.

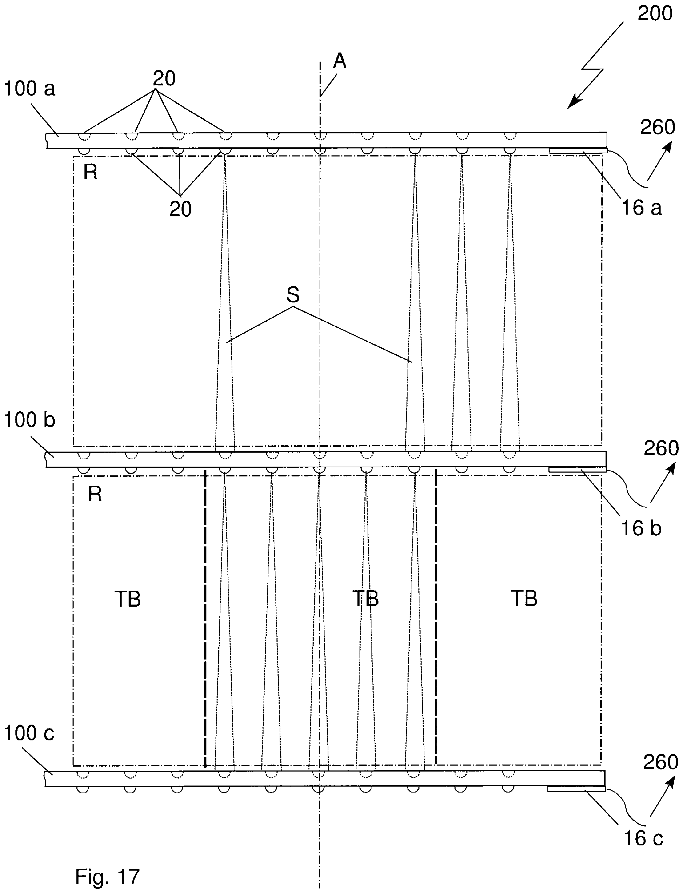

Figur 17 zeigt ein Sensorsystem 200 mit drei jeweils übereinander angeordneten Sensorbaugruppen 100 a-c, die jeweils eine Vielzahl von Sensorelementen 20 aufweisen. Die Sensorelemente jeweils einer Art sind wieder ausschließlich in eine erste Richtung OR 21 und in eine zweite Richtung OR 22 orientiert. Die jeweils miteinander agierenden Sensorelemente unterschiedlicher Sensorbaugruppen liegen alle jeweils auf einer gemeinsamen Achse A. Zwischen jeweils zwei gegenüberliegenden Sensorbaugruppe 100 befindet sich jeweils eine Überwachungsraum R mit einer Vielzahl von zumindest paarweise zusammen agierenden Signalelemente unterschiedlicher Sensorbaugruppen. Die Überwachungsräume R können in kleinere Teilbereiche TB unterteilt werden, indem die Steuerelektronik 260 jeweils Gruppen definiert und diese Gruppen den entsprechenden Teilbereichen TB zuordnet.

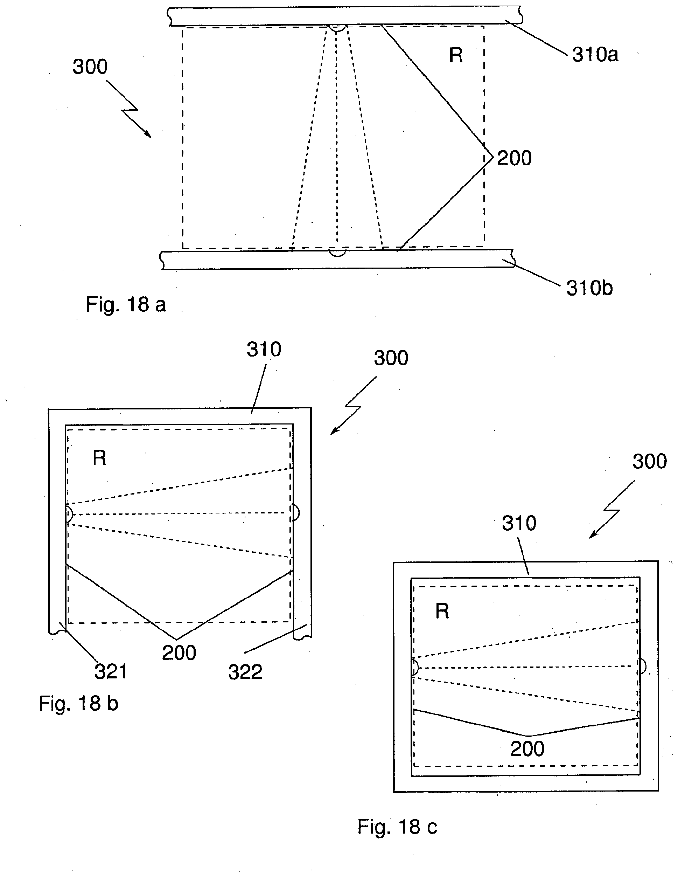

Figuren 18 a-c zeigen schematisch eine Lagervorrichtung 300 mit einem Sensorsystem 200. Dazu weist die Lagervorrichtung 300 einen Lagerraum R zur Aufnahme bzw. einer Abstellfläche für ein Lagergut auf, welcher von einem Begrenzungselement 310 (Fig. 18 c) oder von Abschnitten 321 322 eines Begrenzungselements 310 (Fig. 18 b) oder von zwei verschiedenen Begrenzungselementen 310 a, 310 b (Fig. 18 a) zumindest teilweise ein- bzw. umfasst ist.

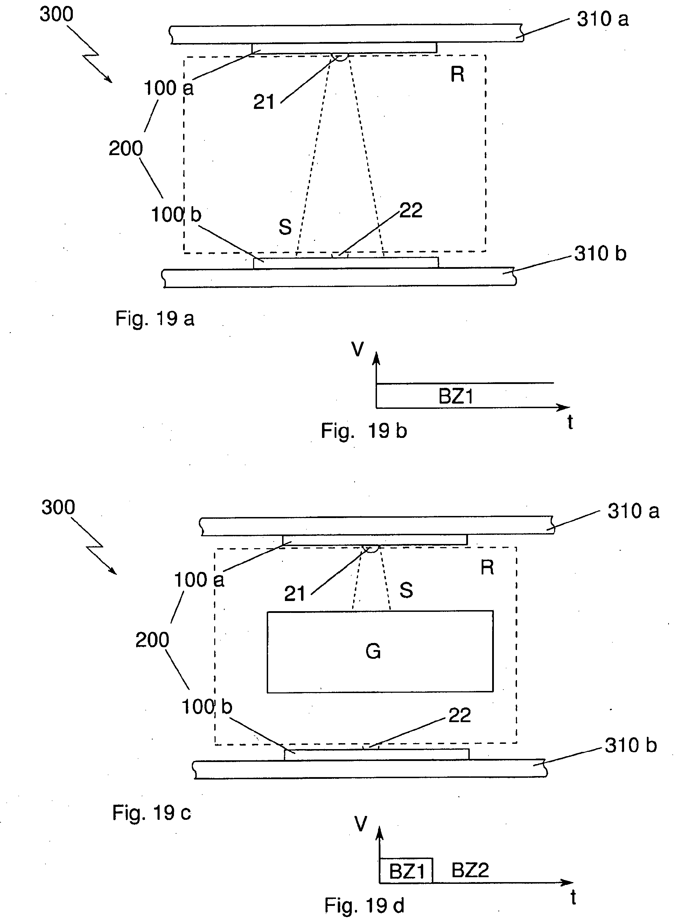

In einem Beispiel ist dazu ein Sensorsystem 200 mit zwei unterschiedlichen Sensorbaugruppe 100 a, 100 b an zwei Begrenzungselementen 310 a, 310 b derart angeordnet dass zumindest ein Signalgeber 21 der ersten Sensorbaugruppe 100 a mit zumindest einem Signalempfänger 22 der zweiten Sensorbaugruppe 100 b agieren kann, wobei ein vom Signalgeber 21 gesendet Signal S durch den Überwachungsraum R zum Signalempfänger 22 gesendet wird (Fig. 19 a). Versperrt kein Lagergut den Weg des Signals S, so empfängt Signalempfänger 22 das vom Signalgeber 21 ausgesendete Signal S und interpretiert das als einen ersten Belegungszustand BZ1, nämlich dass kein Lagergut im Überwachungsraum R enthalten ist (Figur 19 b).

Ist jedoch im Überwachungsraum R ein Lagergut G enthalten, so ist der Signalweg S gestört und ein von einem Signalgeber 21 ausgesendeten Signal S kann vom Signalempfänger 22 nicht empfangen werden (Fig. 19 c), was als zweiter Belegzustand BZ 2 interpretiert wird, nämlich dass ein Lagergut G im Überwachungsraum R vorhanden ist (Figur 19 d).

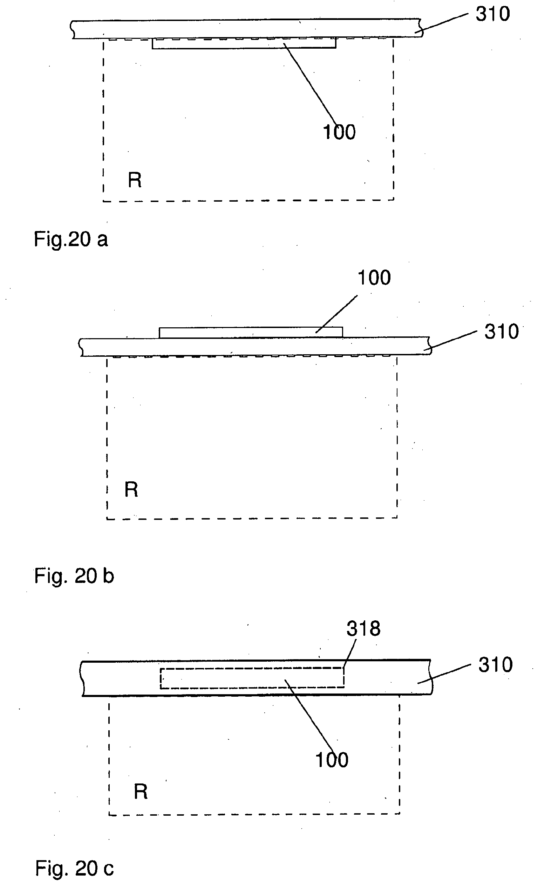

Figuren 20 a-c zeigen verschiedene Möglichkeiten der Anordnung einer Sensorbaugruppe 100 an einem Begrenzungselement 310. Eine Sensorbaugruppe 100 kann entweder an einer zum Überwachungsraum R zugewandten Außenfläche eines Begrenzungselements 310 angeordnet sein (Fig. 20 a). Eine zweite Möglichkeit ist, die Sensorbaugruppe 100 an einer vom Überwachungsraum R abgewandten Außenfläche eines Begrenzungselements 310 anzuordnen (Figur 20 b). Eine weitere Möglichkeit ist eine Sensorbaugruppe 100 zumindest teilweise in ein Begrenzungselement 310 in einer entsprechenden Aussparung 318 zu integrieren (Figur 20 c).

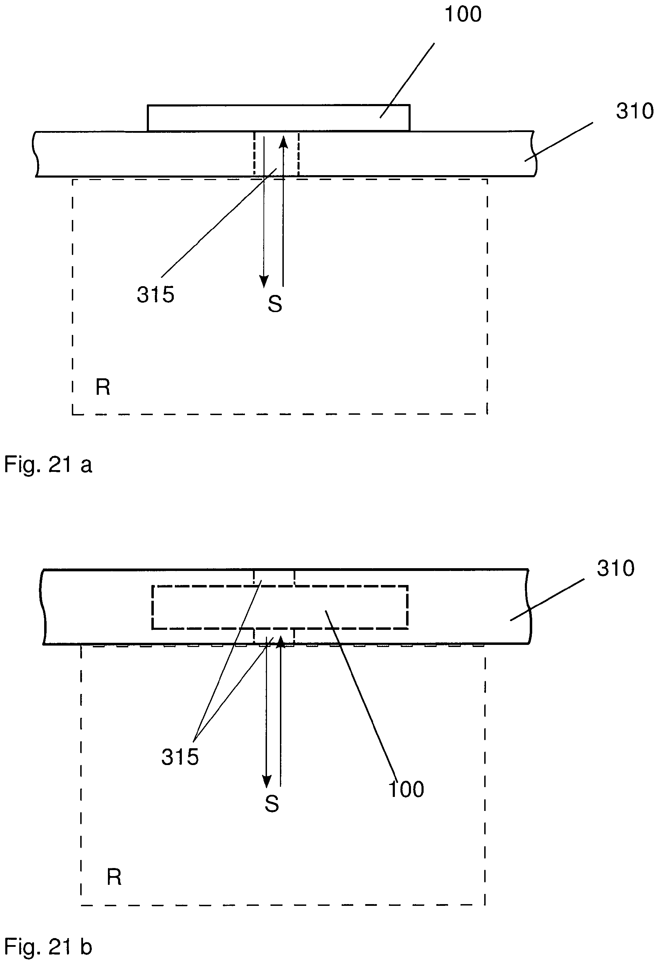

In einem Beispiel für die Anordnung einer Sensorbaugruppe 100 nach den Figuren 20 b und 20 c, wonach die Sensorbaugruppe 100 und daran angeordnete Sensorelemente 20 keinen Zugang zum Überwachungsraum R hätten und so keine Signale S senden oder empfangen könnten, wird in das Begrenzungselement 310 eine Öffnung als Signalöffnung 315 für die Durchleitung von Signalen der Sensorelemente eingebracht (Fig. 21 a). Diese Signalöffnung 315 kann in das Begrenzungselement 310 entweder gestanzt oder gebohrt werden und ermöglicht einem Sensorelement 20 eine Interaktion mit einem komplementären Sensorelement durch den Überwachungsraum R hinweg. Fig. 21 a zeigt eine an einer vom Überwachungsraum R abgewandten Rückseite eines Begrenzungselements 310 angeordneten Sensorbaugruppe 100 mit einer Signalöffnung 315 durch die gesamte Stärke des Begrenzungselements 310. Bei einer integrierten Sensorbaugruppe 100 ist zumindest an einer Seite zumindest eine Signalöffnung 315 oder zu beiden Seiten zumindest zwei Signalöffnungen 315 an den entsprechenden Stellen der Sensorelemente 20 angebracht (Fig. 21 b).

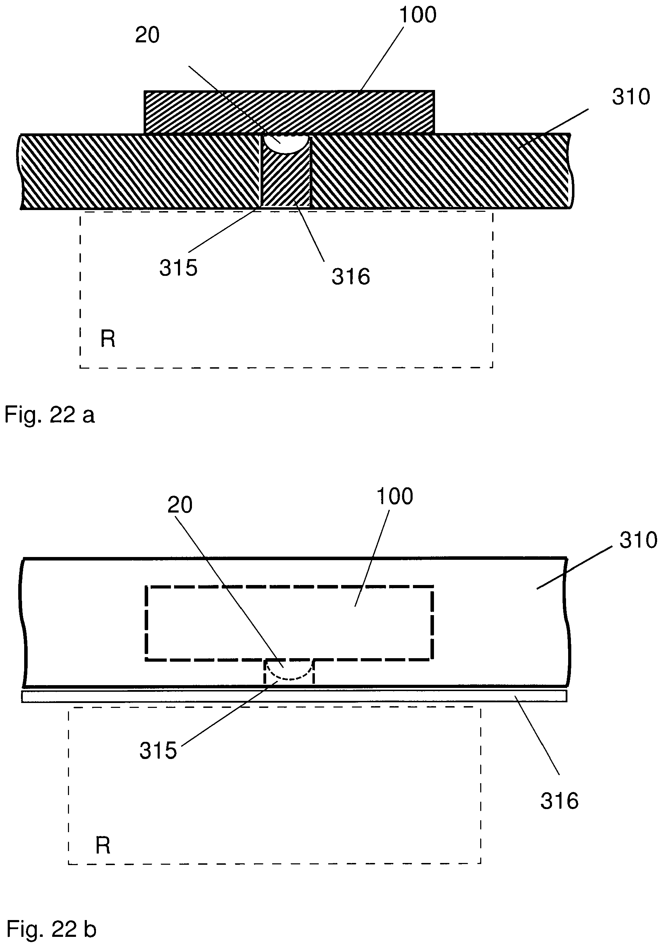

Das Sensorelement 20 kann an der Oberfläche der Sensorbaugruppe 100 vorstehen und kann damit zumindest teilweise eine solche Signalöffnung 315 ausfüllen. Dabei wird die Sensorbaugruppe in Bezug auf das Begrenzungselement positioniert und zumindest ansatzweise fixiert, so dass das zumindest eine Sensorelement 20 sicher mit der Signalöffnung 315 in Deckung kommt. In einer weiteren Ausführungsform ist die Signalöffnung 315 mit einem für die von den Sensorelementen verwendete Signalart durchlässiges Material 316 zumindest teilweise aufgefüllt, z.B. mit einem transparenten Kunstharz. So ist eine glatte Oberfläche vorhanden und es kann sich in die Signalöffnungen kein Schmutz festsetzen, der die Signale stören würde (Fig. 22 a). Alternativ oder zusätzlich kann auch eine weitere Schutzschicht 316 aufgebracht werden, z.B. eine Folie oder ein Klebeband aus einem transparenten Material (Fig. 22 b).

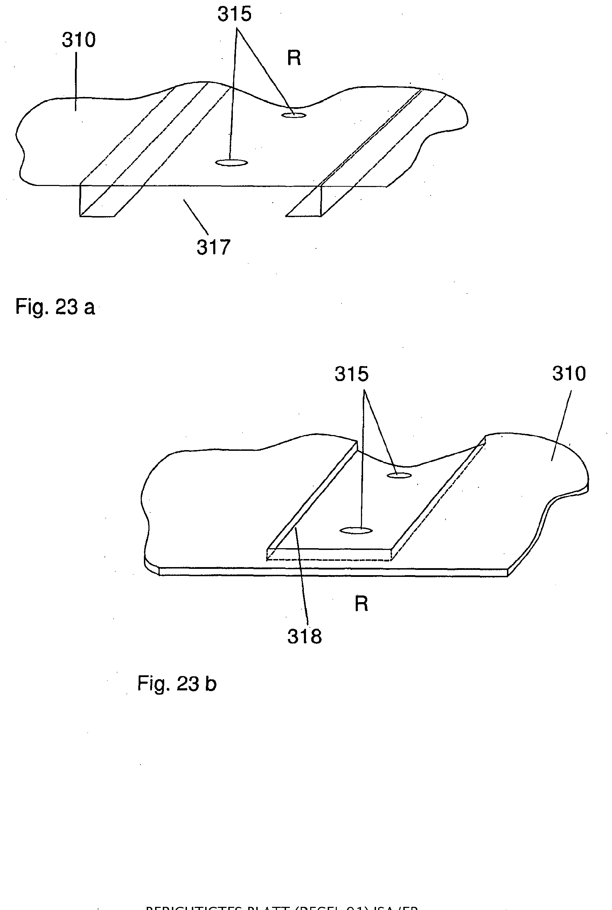

ZurAnordnung einer Sensorbaugruppe 100 ist in einem Beispiel eine Vorrichtung (Fig. 23 a) oder ein Aufnahmeraum 318 (Fig. 23 b) an einem Begrenzuhgselement 310 angeordnet. Fig. 23 a zeigt eine Vorrichtung mit einer Öffnung 317 in die sich eine Sensorbaugruppe (nicht dargestellt) schieben lässt und von der Vorrichtung hintergriffen wird so dass die Sensorbaugruppe an einer Außenfläche sicher gehalten ist. In dem Begrenzungselement 310 sind zum Überwachungsraum R entsprechende Signalöffnung 315 eingebracht damit die Sensorelemente 20 einer Sensorbaugruppe (nicht dargestellt) Signale senden oder empfangen können.

Fig. 23 b zeigt eine zur Aufnahme einer Sensorbaugruppe (nicht dargestellt) bestimmte Ausnehmung in Form einer von oben zugänglichen Vertiefung 318. Darin wird in einer weiteren Ausführungsform bündig abschließend eine Sensorbaugruppe 100 eingelegt. In der Vertiefung sind sich nach unten öffnende Signalöffnungen 315 eingebracht.

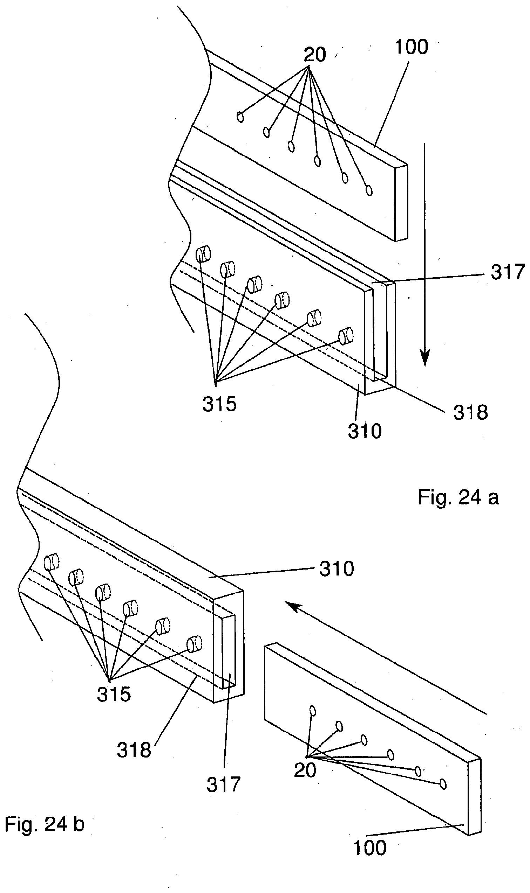

Fig. 24 a zeigt ein Begrenzungselement 310 mit einer nach oben 317 geöffneten Ausnehmung 318, in die von oben eine Sensorbaugruppe 100 eingebracht werden kann. Fig. 24 b zeigt ein Begrenzungselement 310 mit einer zur Seite geöffneten 317 Ausnehmung 318, in die seitlich eine Sensorbaugruppe 100 einschiebbar ist.

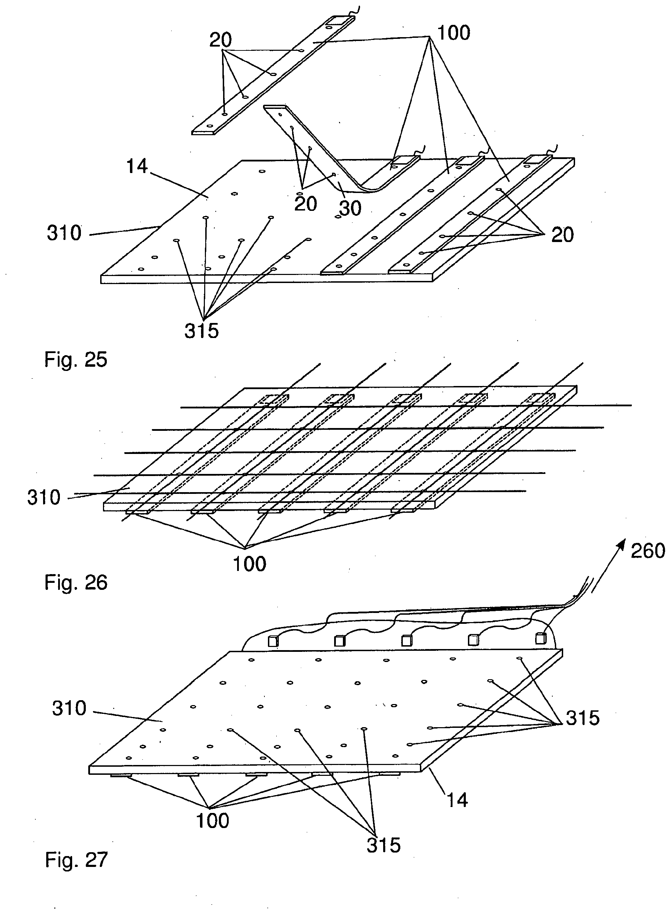

Figur 25 zeigt die Unterseite 14 eines plattenförmigen Begrenzungselements 310 mit einer obenliegender Auflageseite für Lagergüter und entsprechend einem in Bezug zur Schwerkraft F oben liegendem Überwachungsraum, an der mehrere Sensorbaugruppen 100 parallel zueinander angeordnet sind. Die Sensorbaugruppen 100 werden entsprechend der auf den Außenflächen angeordneten Sensorelemente 20 n am Begrenzungselement 310 so ausgerichtet, dass die Sensorelemente 20 mit den entsprechenden Signalöffnungen 315 zur Deckung kommen. Die flexiblen Sensorbaugruppen 100 werden anschließend mit der an einer Seite vorhandenen Klebeschicht an der Außenfläche 14 des Begrenzungselements 310 fixiert.

Jede Sensorbaugruppe 100 verfügt über eine Vielzahl von Sensorelementen 20, die jeweils in einer Reihe an der jeweiligen Sensorbaugruppe 100 angeordnet sind. Da am Begrenzungselement 310 mehrere Sensorbaugruppen 100 jeweils parallel zueinander angeordnet sind ergibt sich eine Sensormatrix (Fig. 26), die jeweils mit einer Steuerelektronik 260 gezielt auch in Teilbereichen angesteuert und oder ausgewertet werden kann (Fig. 27).

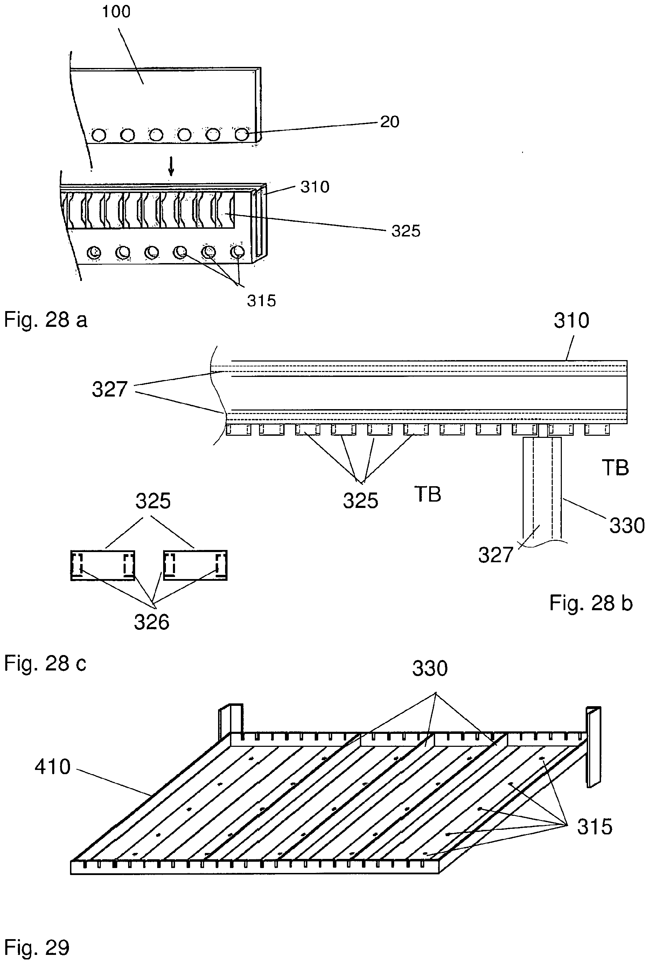

In einer erfindungsgemäßen Ausführung haben die einen Überwachungsraum ein- oder umfassende Begrenzungselemente 310 Vorrichtungen 325 (Fig. 28 a) zur Aufnahme von weiteren Begrenzungselementen 310 bzw. von Trennelementen 330 zur Einrichtung von Teilbereichen TB innerhalb eines Überwachungsraums R (Fig. 28 b). Die weiteren Begrenzungselemente 310 oder Trennelemente 330 werden dazu von oben in die Vorrichtungen 325 eingeschoben, so dass eine annähernd rechtwinklige Ecke und in Verbindung mit dem gleichen Prozedere am anderen Ende des eingeschobenen Begrenzungselemente 310 oder Trennelemente 330 insgesamt ein abgetrennter Teilbereich TB entsteht. In einer Ausführungsform beinhalten die Vorrichtungen 325 seitlich Kontaktflächen 326 (Fig. 28 c), so dass dort eingeschobene Begrenzungselemente und die darin enthaltenen Sensorbaugruppen elektrisch mit dem Sensorsystem 200 bzw. der Lagervorrichtung 300 verbunden sind. Weiter enthalten die Begrenzungselemente 310 oder Trennelemente 330 Strom- und Datenleitungen 327, um eingeschobene Elemente in die Energieversorgung und Datenleitungen der Schublade einzubinden.

Figur 29 zeigt perspektivisch einen Regalboden 410 mit an der Unterseite 14 angeordneten Sensorbaugruppen und durch die Auflagefläche für Lagergüter durchgeführte Signalöffnungen 315. Zusätzlich ist der Regalboden durch parallel zu den Sensorbaugruppen verlaufende Trennelemente 330 in mehrere Regalfächer unterteilt. Ein um den Regalboden allseitig umlaufender Rahmen verhindert ein seitliches Herunterfallen eingelagerter Lagergüter.

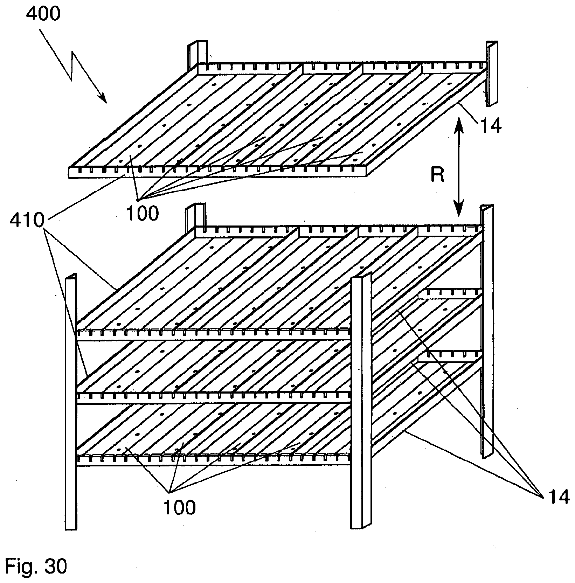

Figur 30 zeigt eine als Regal 400 ausgebildete Lagervorrichtung 300 mit einem ersten Regalboden 410 zur Aufnahme von Lagergütern sowie weiterer Regalböden 410 wobei aufgrund der räumlichen Anordnung zueinander jeweils zwischen zwei Regalböden 410 ein Überwachungsraum R definiert ist, an dessen jeweils oberhalb befindlichen Regalboden 410 an dessen Unterseite 14 eine Vielzahl von Sensorbaugruppen 100 angeordnet sind.

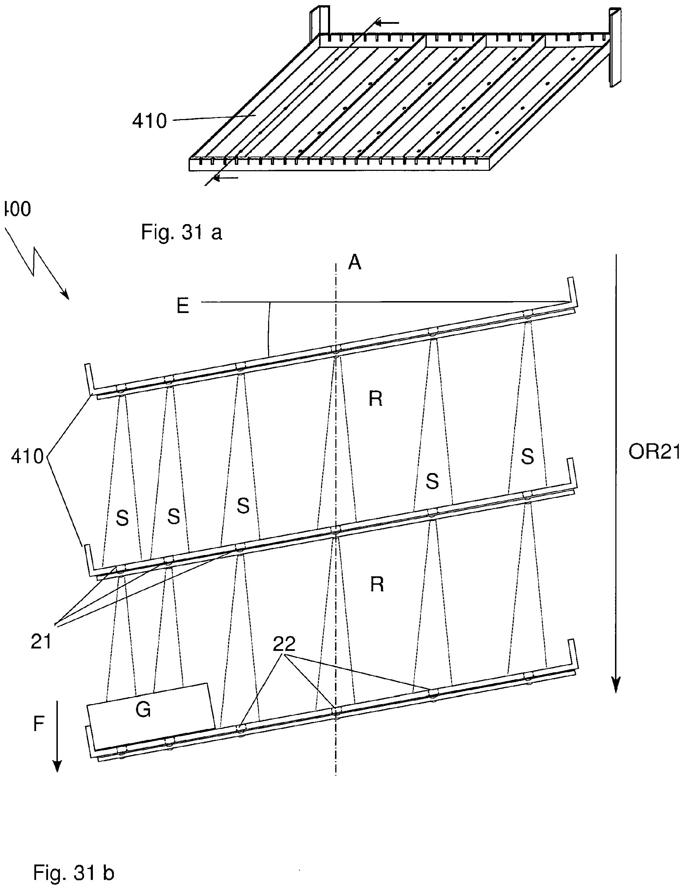

Figur 31 b zeigt einen Schnitt durch ein Regal 400 mit insgesamt drei Regalböden 410 und zwei Überwachungsräumen R. Der Schnitt geht durch eine Sensorbaugruppe 100 auf Höhe der auf einer Linie angeordneten Sensorelementen 20 (Fig. 31 a). Jeweils an der Unterseite eines Regalbodens 410 ist eine Sensorbaugruppe 100 angeordnet, wobei die Signalgeber 21 von oben nach unten (OR 21) und die Signalempfänger 22 von unten nach oben (OR 22) orientiert sind. Die Regalböden weisen an einer Seite ein Gefälle auf, welches dafür sorgt, dass die Lücke eines entnommenen Lagerguts G, z.B. ein Paket mit Schrauben durch nachrutschende Pakete geschlossen wird und immer ein Paket vorne am Entnahmepunkt bereitsteht, solange noch Pakete im entsprechenden Warenfach sind. Im Lagerfach vorhandene Pakte verhindern den Empfang der von den oberhalb der Pakete angeordneten Signalgeber 21 ausgesendeten Signale S durch die von den Paketen verdeckten Signalempfängern 22, so dass ein gesendetes, aber nicht empfangendes Signal S als ein erster Belegungszustand als "vorhanden" interpretiert wird. Dort, wo kein Paket mehr vorhanden ist kann ein Signal S empfangen werden, was als zweiter Belegungszustand und als "leer" interpretiert wird. Die einzelnen Belegzustände werden entweder periodisch oder aufgrund eines Ereignisses, z.B. eine manuelle Anfrage abgefragt und an ein übergeordnetes Verwaltungssystem weitergemeldet, welches aufgrund des Lagerplatzes bzw. der Zuordnung eines Überwachungsraums R bzw. seiner Teilbereiche TB zu bestimmten Waren eine Bestandsfortschreibung durchführt und ggfs. Bestellvorgänge auslöst.

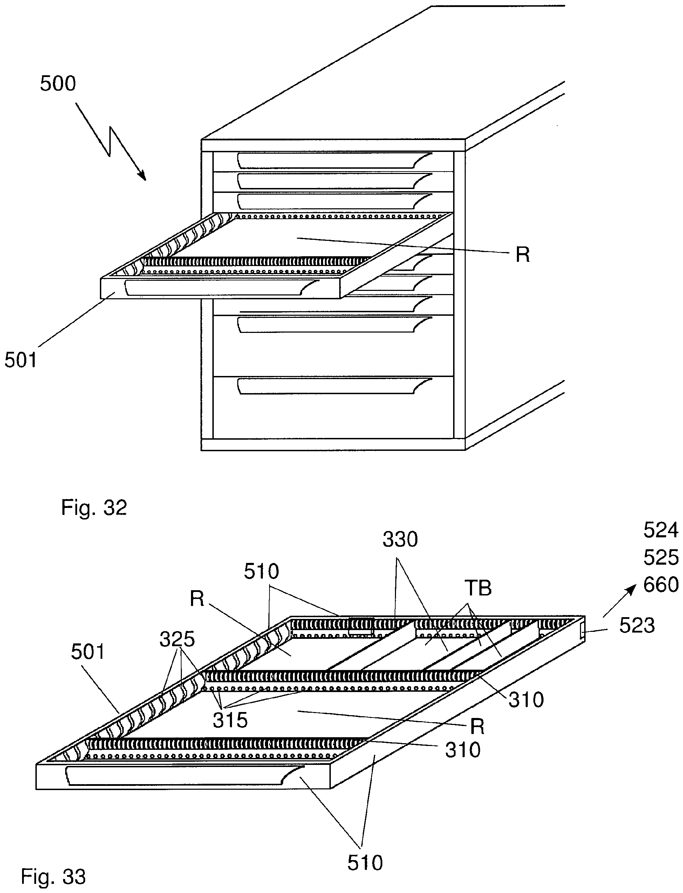

Figur 32 zeigt einen Schrank 500 als Lagervorrichtung mit zumindest einer Schublade 501 und einen im Innenraum der Schublade enthaltenen Überwachungsraum R.

Die Schublade 501 wird von einem Schubladenboden als Auflagefläche für Lagergüter und einen um den Boden herumlaufenden Rahmen aus vier Seitenwänden 510 gebildet. Die Seitenwände 510 weisen Fixiervorrichtungen 325 zum Einschieben weiterer Begrenzungselemente 310 sowie weiterer Trennelemente 330 auf. In den quer zur Auszugsrichtung angeordneten Begrenzungselementen 310 bzw. der Vorder- und Rückseiten 510 sind Sensorbaugruppen integriert, wobei an ihren zum Überwachungsraum R hin weisenden Außenflächen jeweils entsprechend den Sensorelementen 20 Signalöffnungen 315 vorhanden sind. Auch hier sind Sensorelemente jeweils einer Art in nur eine Richtung parallel zur Auszugsrichtung orientiert. An jeweils einer Schublade 501 ist am rückwärtigen Bereich ein zentraler Stecker 523 für die Energieversorgung 525 sowie die Datenleitungen 524 angeordnet. Bei einem Öffnen wird die Schublade 501 mit dem Stecker 523 aus einem Gegenstück am Korpus des Schranks 500 herausgezogen, so dass alle elektrischen Komponenten ohne Energieversorgung sind. Falls erforderlich oder gewünscht, kann hier noch die Schublade mit einem Energiepufferspeicher versehen werden. Beim Schließen fährt die Schublade 501 mit dem Stecker 523 wieder in das Gegenstück am Korpus ein und stellt wieder eine Verbindung mit der Energieversorgung 525 sowie mit den Datenleitungen 524 her. Das Schließen löst eine Erfassung der einzelnen Belegzustände aus und die Daten werden an ein übergeordnetes System 660 zur Auswertung bzw. Bestandsfortschreibung übermittelt. (Fig. 33).

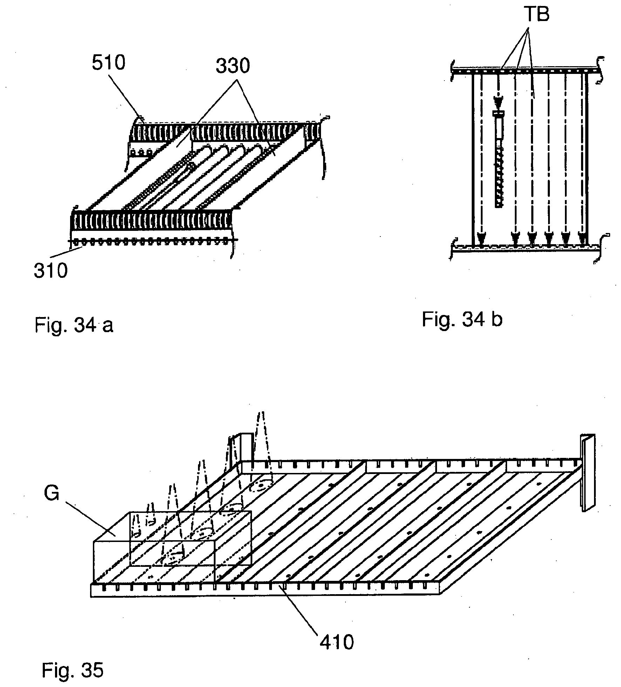

Trennelemente 330 ermöglichen auch hier eine Unterteilung einer Schublade 501 und des darin befindlichen Überwachungsraums R in kleinere Teilbereiche TB bzw. einzelne Fächer (Fig. 33 u. 34 a). Durch Einlegeböden kann je ein Teilbereich genau einem Sensorelementepaar zugeordnet werden (Fig. 34 a u. 34 b).

Die Trennelemente 330 können auch je Anforderung entfernt und neu gesteckt werden. Danach muss das System neu initialisiert werden, indem das System automatisch die gesteckten Trennelemente 330 bzw. die von den Trennelemente 330 definierten Teilbereiche TB in zumindest einer Schublade 501 erkennt und abspeichert. Die Erkennung der Trennelemente 330 und deren Position in Bezug auf eine Sensorgruppe bzw. zu einzelnen oder zu Gruppen zusammengefassten Sensorelementen erfolgt, indem die an einer Stirnseite des Trennelement 330 quer zum Trennelement 330 angeordneten Signalgebern schrittweise an- und abgeschaltet werden und die Signale der gegenüberliegenden Signalempfänger ausgewertet werden, indem ein ausgegebenes Signal ohne Behinderung durch ein Trennelement 330 von mehreren gegenüberliegenden und nebeneinander angeordneten Signalempfängern empfangen werden kann, bei einem vorhandenen Trennelement 330 aber nur maximal vom direkt gegenüber und am Trennelement anliegenden Signalempfänger, wodurch eine scharfe Grenze aufgrund gesendeter, aber nicht empfangener Signale feststellbar ist und als Trennelement interpretiert wird. Dazu müssen die Signalgeber jeweils ein leicht kegelförmiges Signal abgeben, so dass neben dem direkt gegenüberliegendem Signalempfänger auch mindestens die dazu benachbarten Signalempfänger ein Signal empfangen können. Weiter müssen zuvor eventuell eingelegte Stückgüter, zumindest in den, an das neu gesteckte Trennelement 330 angrenzenden Teilbereiche TB entfernt werden, so dass als Ursache für ein nicht empfangenes Signal eines Signalempfängers, wenn in einer Richtung daneben angeordnete Signalempfänger Signale empfangen können, nur ein vorhandenes Trennelement 330 in Frage kommt (Fig. 32 - 34 b).

Nach einer neuen Aufteilung eines Überwachungsraums R einer Schublade 501 wird das Steuersystem auf den normalen Betriebsmodus geschaltet, so das dann nicht empfangene oder zumindest deutlich schwächere Signale auf ein vorhandenes Stückgut schließen lassen. Deutlich schwächer bedeutet z.B., dass einem durch ein Trennelement 330 abgegrenzter Teilbereich TB 5 Signalgeber und 5 Signalempfänger zugeordnet sind, bei der Signalabgabe von diesen 5 Signalgeber aber nur 2 Signalempfänger ein Signal empfangen (Fig. 32 - 34 b).

Figur 35 zeigt nochmals anhand dem Beispiel eines Regalbodens 410 und anhand der Sensormatrix wie in einer erfindungsgemäßen Ausführung Überwachungsräume geschaffen werden, die nicht nur einem Sensorstreifen entsprechen und dort mit einem Abstand von einem Sensorelement zum nächsten, sondern das sowohl in Tiefe als auch in Breite nebeneinander liegende Sensorelemente zu logischen Fächern zusammengeschaltet werden können und den tatsächlichen Größen von einzuladen Gütern nachgebildet werden, so dass je nach Größe der Güter spezifische Belegzustände im System angelegt und entsprechend abgefragt werden können.

### Bezugszeichenliste

- 100: Sensorbaugruppe
- 10: Trägerelement
- 11: Außenfläche
- 12: Außenfläche
- 13: Außenfläche
- 14: Außenfläche
- 15: Leiterbahn
- 16: Steuerelektronik
- 20: Sensorelement
- 21: Signalgeber
- 22: Signalempfänger
- 23: elektrische / elektronische Bauteile
- 24: Datenbus
- 25: Stromversorgung
- 26: Prüfsignalgeber
- 30: Klebefläche
- 31: Deckfolie
- 32: Schutzschicht / -folie
- 40: Markierung / Fixierung
- 200: Sensorsystem
- 260: Steuerelektronik
- 270: Kommunikationseinrichtung
- 300: Lagervorrichtung
- 310: Begrenzungselement
- 311 a, b, c, d ,e, f: Außenflächen d. Begrenzungselement
- 315: Signalöffnung zur Durchleitung von Signalen
- 316: Schutzschicht
- 317: Einschuböffnung
- 318: Ausnehmung
- 321: Abschnitt des Begrenzungselements
- 322: Abschnitt des Begrenzungselements
- 325: Fixiervorrichtung f. Trennelement
- 326: Kontakt Fixiervorrichtung
- 327: Strom- u. Datenleitung
- 330: Trennelement
- 331: Kontakt
- 360: Steuereinheit
- 400: Regal
- 410: Regalboden
- 500: Schrank
- 501: Schublade
- 510 a, b, c, d: Seitenwände
- 523: Schubladenstecker
- 524: Datenbus
- 525: Stromversorgung
- 660: Verwaltungssystem
- A: Achse
- B: Bezugspunkt
- BZ: Belegzustand
- E: Ebene
- F: Schwerkraft
- G: Lagergut
- OR: Orientierungsrichtung
- R: Überwachungsraum
- S: Signal
- TB: Teilbereich

## Patentansprüche

1. Schublade (501) mit einem Überwachungsraum (R) zur Einlagerung von Stückgut (G) mit einem Boden (410) und vier Seitenwänden (510) und mit mindestens einem parallel zu den Seitenwänden (510) eingesetzten Trennelement (330), so dass zumindest zwei Teilbereiche (TB) entstehen, wobei mindestens ein Teilbereich (TB) an zumindest zwei gegenüberliegenden Seiten jeweils zumindest eine Sensorbaugruppe (100) mit einer Mehrzahl von Signalgebern (21) und/oder Signalempfängern (22), jeweils eine Steuerelektronik (16) zur Stromversorgung, Steuerung und/oder Verarbeitung von Signalen (S) aufweist,
wobei ein Signal (S) eines Signalgebers (21) einer der Sensorbaugruppen (100) von einer Mehrzahl von Signalempfängern (22) der gegenüberliegenden Sensorbaugruppe (100) detektierbar ist und das zumindest eine Trennelement (330) annähernd parallel zur Signalrichtung (S) zwischen Signalgebern und Signalempfängern positioniert ist; **dadurch gekennzeichnet, dass**
zumindest eine Sensorbaugruppe (100) an zumindest einer Seite des Teilbereichs (TB) in eine Seitenwand (510) und/oder in ein Trennelement (330) anhand einer Aussparung integriert ist; und
die Aussparung eine Einschuböffnung zum Einführen einer Sensorbaugruppe (100) aufweist.

2. Schublade (501) nach Anspruch 1, **dadurch gekennzeichnet, dass**
auf einer Außenfläche einer Sensorbaugruppe (100) jeweils nur Signalgeber (21) oder Signalempfänger (22) angeordnet sind; und/oder
auf der unbestückten Rückseite der Sensorbaugruppe (100) eine Klebefläche (30) angeordnet ist; und/oder
auf einer Außenfläche (12) einer Sensorbaugruppe (100) Signalgeber (21) und auf der entgegengesetzten Außenfläche (14) Signalempfänger (22) angeordnet sind; und/oder
in der Seitenwand (510) und/oder im Trennelement (330) Signalöffnungen (315) zur Durchleitung der Signale (S) vorhanden sind; und/oder
zumindest eine Seitenwand (510) und/oder zumindest ein Trennelement (330) Fixiervorrichtungen (325) zum Einstecken von Trennelementen (330) aufweist, wobei die Fixiervorrichtungen (325) Kontakte (326) bereitstellen zur elektrischen Anbindung eines eingeschobenen Trennelement (330) zur Stromversorgung sowie zur Durchleitung von Steuerungs- und/oder Datensignalen an die oder von den Sensorbaugruppen (100).

3. Lagervorrichtung (500) mit zumindest einer Schublade (501) nach einem der vorherigen Ansprüche, **dadurch gekennzeichnet, dass** ein Datenbussystem (524) zur Weiterleitung der Steuersignale für zumindest eine Sensorbaugruppe (100), der Signale (S) der Sensorbaugruppe (100) und eine Stromversorgung (525) für die zumindest eine Sensorbaugruppe (100) vorhanden ist.

4. Lagervorrichtung (500) nach Anspruch 3, **dadurch gekennzeichnet, dass** die Schublade (501) einen Schubladenstecker (523) aufweist, der die Schublade (501) im geschlossenen Zustand mit Stromversorgung (525) und Datenbus (524) verbindet.

5. Lagervorrichtung (500) nach einem der vorhergehenden Ansprüche 3 - 4, **dadurch gekennzeichnet, dass** eine Steuereinheit (260) zur Entgegennahme, Verarbeitung und Ausgabe von Steuersignalen (S) über den Datenbus (524) von bzw. an die Sensorbaugruppen (100) vorhanden ist.

6. Lagervorrichtung (500) nach einem der vorhergehenden Ansprüche 3 - 5, **dadurch gekennzeichnet, dass** eine Sensorbaugruppe (100 a) gegenüber anderen Sensorbaugruppen (100b) eindeutig identifizierbar ist.

7. Lagervorrichtung (500) nach einem der vorhergehenden Ansprüche 3 - 6, **dadurch gekennzeichnet, dass** alle Sensorbaugruppen (100) in der Steuereinheit (260) derart verwaltet werden, dass paarweise zusammenwirkende Sensorbaugruppen (100a, 100b), Gruppen paarweise zusammenwirkender Signalgeber (21) und Signalempfänger (22) oder zumindest einzeln paarweise zusammenwirkende Signalgeber (21) und Signalempfänger (22) speicherbar und wieder abrufbar sind und individuell zur Abgabe oder Abfrage von Signalen (S) angesteuert werden können.

8. Lagervorrichtung (500) nach einem der vorhergehenden Ansprüche 3- 7, **dadurch gekennzeichnet, dass** in der Steuereinheit (260) eine Zuordnung der paarweise zusammenwirkenden Sensorbaugruppen (100a, 100b), der Gruppen paarweise zusammenwirkender Signalgeber (21) und Signalempfänger(22) und/oder zumindest einzeln paarweise zusammenwirkende Signalgeber (21) und Signalempfänger (22) zur Schublade und/oder zum Überwachungsraum (R) oder zum Teilbereich (TB) erfolgt.

9. Lagervorrichtung (500) nach einem der vorhergehenden Ansprüche 3 - 8, **dadurch gekennzeichnet, dass** in der Steuereinheit (260) eine Zuordnung mindestens eines Überwachungsraums (R) oder zumindest eines Teilbereichs (TB) zum eingelagerten Stückgut (G) erfolgt, insbesondere um welches Stückgut es sich handelt und eine Bestandsermittlung und -fortschreibung erfolgt.

10. Lagervorrichtung (500) nach einem der vorhergehenden Ansprüche 3 - 9, **gekennzeichnet durch** die Ausführung als ein Regal, ein Schrank, ein Werkstattwagen oder ein Rollcontainer.

11. Verfahren zum Initialisieren einer Lagervorrichtung (500) nach einem der Ansprüchen 3 - 10, mit den Schritten:
a. Öffnen der zumindest einen Schublade (501)
b. ggfs. Entfernen von vorhandenem Stückgut (G)
c. Schalten der Steuereinheit (360) in einen Initialisierungsmodus
d. Einsetzen zumindest eines Trennelements (330) zur Bildung zumindest zweier leerer Teilbereiche (TB)
e. Schließen der Schublade (501)
f. Erkennung des zumindest einen gesetzten Trennelements (330)
g. Abspeicherung der Position der zumindest einen Trennelements(330)
h. Systemseitige Abbildung logischer Teilbereiche TB für die Lagerung von Stückgütern (G)
i. Zuordnung der paarweise zusammenwirkenden Signalgeber (21) und Signalempfänger (22) zum Lagerraum (R) und/oder Teilbereich (TB)
j. Abschalten des Initialisierungsmodus und Abspeicherung der erfassten Daten.

12. Verfahren zum Initialisieren einer Lagervorrichtung (500) nach dem vorhergehenden Anspruch **dadurch gekennzeichnet, dass** die Erkennung der zumindest einen gesetzten Trennelements (330) durch schrittweises An- und Abschalten der an einer Stirnseite des Trennelements (330) quer dazu angeordneten Signalgebern (21) und Auswertung der Signale (S) der gegenüberliegenden Signalempfänger (22) erfolgt, indem ein ausgegebenes Signal (S) ohne Behinderung durch ein Trennelement (330) von mehreren gegenüberliegenden und nebeneinander angeordneten Signalempfängern (22) empfangen werden kann, bei einem vorhandenen Trennelement (330) aber nur maximal vom direkt gegenüber und am Trennelement anliegenden Signalempfänger, wodurch eine scharfe Grenze aufgrund gesendeter, aber nicht empfangener Signale (S) feststellbar ist.

13. Verfahren zum Betrieb einer Lagervorrichtung (500) nach einem der Ansprüchen 3 - 12, mit den Schritten:
a. Öffnen der zumindest einen Schublade (501)
b. Einlagerung oder Entnahme von Stückgut (G)
c. Schließen der Schublade (501)
d. Belegerkennung im Überwachungsraum (R) oder zumindest im Teilbereich (TB)
e. Erfassung des Warenbestands an Stückgut (G) und ggfs. Bestandfortschreibung
f. bei Unterschreiten einer Mindestmenge ggfs. Auslösen einer Nachbestellung.

14. Verfahren zum Betrieb einer Lagervorrichtung (500) nach dem vorhergehenden Anspruch, **dadurch gekennzeichnet, dass** die Belegerkennung durch Aktivieren der zu einem Überwachungsraum (R) oder eines Teilbereichs (TB) zugeordneten Signalgeber (21) und Abfrage der Signalempfänger (22) erfolgt, indem ein empfangenes Signal (S) als ein fehlendes Stückgut (G) und ein nichtempfangenes oder nur sehr schwaches Signal (S) als ein vorhandenes Stückgut (G) interpretiert wird.

15. Verfahren zum Betrieb einer Lagervorrichtung (500) nach einem der vorhergehenden Ansprüche 13 -14, **dadurch gekennzeichnet, dass** die Belegerkennung durch Schalten des Schubladenschalters (52)3 beim Schließen der Schublade (501) ausgelöst wird.

## Claims

1. Drawer (501) with a control room (R) for storing piece goods (G) with a bottom (410) and four side walls (510) and with at least one separating element (330) which is inserted parallel to the side walls (510), so that at least two segments (TB) are formed, wherein at least one segment (TB) comprises at least at two opposing sides at least one respective sensor assembly (100) with a plurality of signal transmitters (21) and/or signal receivers (22), each of control electronics (16) for power supply, controlling and/or processing of signals (S),
wherein a signal (S) of a signal transmitter (21) of a sensor assembly (100) of a plurality of signal receivers (22) of the opposing sensor assembly (100) is detectable and the at least one separating element (330) is positioned approximately parallel to the direction of a signal (S) between signal transmitters and signal receivers, **characterized in that**
at least a sensor assembly (100) is integrated at least at a side of the segment (TB) into a side wall (510) and/or into a separating element (330) by means of a recess; and
the recess comprises an insertion opening for inserting a sensor assembly (100).

2. Drawer (501) according to claim 1, **characterized in that**
on an outer surface of a sensor assembly (100) only either signal transmitter (21) or signal receiver (22) are arranged; and/or
on the unpopulated back side of the sensor assembly (100) there is arranged an adherend (30); and/or
on an outer surface (12) of a sensor assembly (100), signal transmitters (21) and on the opposite outer surface (14) signal receivers (22) are arranged; and/or
in the side wall (510) and/or in the separating element (330), signal openings (315) for transmitting the signals (S) are present; and/or
at least one side wall (510) and/or at least one separating element (330) comprises fixing devices (325) for inserting of separating elements (330), wherein the fixing devices (325) provide contacts (326) for electrically connecting an inserted separating element (330) for power supply as well es for the transmission of control and/or data signals to or from the sensor assembly (100).

3. Storage device (500) with at least one drawer (501) according to one of the preceding claims, **characterized in that** a data bus system (524) for transmitting the control signals for at least one sensor assembly (100), the signals (S) of the sensor assembly (100) and a power supply (525) for the at least one sensor assembly (100) is present.

4. Storage device (500) according to claim 3, **characterized in that**
the drawer (501) comprises a drawer connector (523), which connects the drawer (501) in a closed state to power supply (525) and data bus (524).

5. Storage device (500) according to one of the preceding claims 3-4, **characterized in that**
a control unit (260) for reception, processing and output of control signals (S) via the data bus (524) from or to the sensor assembly (100) is present.

6. Storage device (500) according to one of the preceding claims 3-5, **characterized in that**
a sensor assembly (100 a) is clearly identifiable against other sensor assemblies (100 b).

7. Storage device (500) according to one of the preceding claims 3-6, **characterized in that**
all sensor assemblies (100) in the control unit (260) are managed in such a way, that sensor assemblies (100 a, 100 b) that cooperate in pairs, groups of signal transmitters (21) and signal receivers (22) that cooperate in pairs or signal transmitters (21) and signal receivers (22) that cooperate at least individually in pairs, are storable and retrievable again and can be controlled individually for delivery or retrieval of signals (S).

8. Storage device (500) according to one of the preceding claims 3-7, **characterized in that**
in the control unit (260) an allocation of the sensor assemblies (100 a, 100 b) that are cooperating in pairs, of the groups of signal transmitters (21) and signal receivers (22) that are cooperating in pairs, and/or signal transmitters (21) and signal receivers (22), that cooperate at least individually in pairs, to the drawer and/or to the control room (R) or to the segment (TB) takes place.

9. Storage device (500) according to one of the preceding claims 3-8, **characterized in that**
in the control unit (260) an allocation of at least one control room (R) or of at least one segment (TB) to the stored piece goods (G), in particular what piece goods are concerned, and an inventory determination takes place.

10. Storage device (500) according to one of the preceding claims 3-9, **characterized by** the design as a shelf, a cabinet, a workshop trolley or a roll container.

11. Method for initializing a storage device (500) according to one of the claims 3-10, by means of the steps:
a. Opening the least one drawer (501)
b. If applicable, removal of available piece goods (G)
c. Switching the control unit (360) to an initializing mode
d. Inserting at least one separating element (330) for forming at least two empty segments (TB)
e. Closing the drawer (501)
f. Identifying the at least one inserted separating element (330)
g. Saving the position of the at least one separating element (330)
h. Representing, by the system, logical segments (TB) for the storage of piece goods (G)
i. Allocating the signal transmitters (21) and the signal receivers (22) that are cooperating in pairs, to the storage room (R) and/or the segment (TB)
j. Switching off the initializing mode and saving the acquired data.

12. Method for initializing a storage device (500) according to the preceding claim, **characterized in that**
the identification of the at least one inserted separating element (330) is done by step-by-step switching on and off the signal transmitters (21), that are arranged at the front end of the separating element (330) crosswise thereto, and by analyzing the signals (S) of the opposing signal receivers (22), **in that** an output signal (S) can be received without hindrance by a separating element (330) from several signal receivers (22) arranged opposite and next to each other, but with a present separating element (330) only at most from the signal receiver arranged directly opposite and adjacent to the separating element, whereby a sharp limit due to signals (S) that are transmitted but not received can be detected.

13. Method for operating a storage device (500) according to one of the claims 3-12, with the steps:
a. Opening the at least one drawer (501)
b. Storing or extracting piece goods (G)
c. Closing the drawer (501)
d. Identifying an occupation in the control room (R) or at least in the segment (TB)
e. Acquiring the inventory of piece goods (G) and, if applicable, inventory update
f. Upon underrunning the minimum quantity, if applicable, triggering a repeat order.

14. Method for operating a storage device (500) according to the preceding claim, **characterized in that**
identifying an occupation is carried out by activating the signal transmitters (21) that are allocated to a control room (R) or to a segment (TB), and inquiring of the signal receivers 22, **in that** a received signal (S) is interpreted as a missing piece good (G) and a non-received signal or only very weak signal (S) is interpreted as an available piece good (G).

15. Method for operating a storage device (500) according to one of the preceding claims 13-14, **characterized in that**
identifying an occupation is triggered by switching the drawer switch (52)3 upon closing the drawer (501).

## Revendications

1. Tiroir (501) avec un compartiment de surveillance (R) pour le stockage d'un produit en vrac (G) avec un fond (410) et quatre parois latérales (510) et avec au moins un élément de séparation (330) inséré parallèlement aux parois latérales (510), de sorte qu'au moins deux zones partielles (TB) sont obtenues, dans lequel au moins une zone partielle (TB) présente sur au moins deux faces opposées respectivement au moins un module de détection (100) avec une pluralité d'émetteurs de signaux (21) et/ou de récepteurs de signaux (22), respectivement une électronique de commande (16) pour l'alimentation en courant, la commande et/ou le traitement de signaux (S),
dans lequel
un signal (S) d'un émetteur de signaux (21) d'un des modules de détection (100) peut être détecté par une pluralité de récepteurs de signaux (22) du module de détection (100) opposé et au moins un élément de séparation (330) est positionné à peu près parallèlement à la direction de signal (S) entre des émetteurs de signaux et des récepteurs de signaux ; **caractérisé en ce que**
au moins un module de détection (100) est intégré sur au moins une face de la zone partielle (TB) dans une paroi latérale (510) et/ou dans un élément de séparation (330) à l'aide d'un évidement ; et
l'évidement présente une ouverture d'introduction pour l'introduction d'un module de détection (100).

2. Tiroir (501) selon la revendication 1, **caractérisé en ce que**
respectivement seuls des émetteurs de signaux (21) ou récepteurs de signaux (22) sont disposés sur une surface extérieure d'un module de détection (100) ; et/ou
une surface adhésive (30) est disposée sur la face arrière non garnie du module de détection (100) ; et/ou
des émetteurs de signaux (21) sont disposés sur une surface extérieure (12) d'un module de détection (100) et des récepteurs de signaux (22) sur la surface extérieure (14) opposée ; et/ou
des ouvertures de signaux (315) pour le transfert des signaux (S) sont présentes dans la paroi latérale (510) et/ou dans l'élément de séparation (330) ; et/ou
au moins une paroi latérale (510) et/ou au moins un élément de séparation (330) présente des dispositifs de fixation (325) pour l'insertion d'éléments de séparation (330), dans lequel les dispositifs de fixation (325) fournissent des contacts (326) pour le raccordement électrique d'un élément de séparation (330) introduit pour l'alimentation en courant ainsi que pour le transfert de signaux de commande et/ou de données aux ou à partir des modules de détection (100).

3. Dispositif de stockage (500) avec au moins un tiroir (501) selon l'une quelconque des revendications précédentes, **caractérisé en ce qu'**un système de bus de données (524) destiné à transmettre les signaux de commande pour au moins un module de détection (100), les signaux (S) du module de détection (100) et une alimentation en courant (525) pour au moins un module de détection (100) est présent.

4. Dispositif de stockage (500) selon la revendication 3, **caractérisé en ce que** le tiroir (501) présente un connecteur de tiroir (523), qui relie le tiroir (501) dans l'état fermé à l'alimentation en courant (525) et au bus de données (524).

5. Dispositif de stockage (500) selon l'une quelconque des revendications 3 à 4, **caractérisé en ce qu'**une unité de commande (260) pour la réception, le traitement et l'émission de signaux de commande (S) par l'intermédiaire du bus de données (524) à partir des ou aux modules de détection (100) est présente.

6. Dispositif de stockage (500) selon l'une quelconque des revendications 3 à 5, **caractérisé en ce qu'**un module de détection (100 a) peut être identifié de manière univoque par rapport aux autres modules de détection (100b).

7. Dispositif de stockage (500) selon l'une quelconque des revendications 3 à 6, **caractérisé en ce que** tous les modules de détection (100) sont gérés dans l'unité de commande (260) de telle sorte que des modules de détection (100a, 100b) coopérant par paires, des groupes d'émetteurs de signaux (21) et de récepteurs de signaux (22) coopérant par paires ou au moins des émetteurs de signaux (21) et récepteurs de signaux (22) coopérant individuellement par paires peuvent être mis en mémoire et peuvent à nouveau être consultés et peuvent être commandés individuellement pour l'émission ou l'interrogation de signaux (S).

8. Dispositif de stockage (500) selon l'une quelconque des revendications 3 à 7, **caractérisé en ce qu'**une association des modules de détection (100a, 100b) coopérant par paires, des groupes d'émetteurs de signaux (21) et de récepteurs de signaux (22) coopérant par paires et/ou d'émetteurs de signaux (21) et de récepteurs de signaux (22) coopérant au moins individuellement par paires au tiroir et/ou au compartiment de surveillance (R) ou à la zone partielle (TB) s'effectue dans l'unité de commande (260).

9. Dispositif de stockage (500) selon l'une quelconque des revendications précédentes 3 à 8, **caractérisé en ce qu'**une association d'au moins un compartiment de surveillance (R) ou d'au moins une zone partielle (TB) au produit en vrac (G) à stocker s'effectue, en particulier de quel produit en vrac il s'agit, et une détermination et mise à jour du stock s'effectue dans l'unité de commande (260).

10. Dispositif de stockage (500) selon l'une quelconque des revendications précédentes 3 à 9, **caractérisé par** la réalisation en tant que rayonnage, armoire, wagon-atelier ou conteneur roulant.

11. Procédé pour initialiser un dispositif de stockage (500) selon l'une quelconque des revendications 3 à 10, avec les étapes :
a. d'ouverture d'au moins un tiroir (501)
b. éventuellement de retrait d'un produit en vrac (G) présent
c. de commutation de l'unité de commande (360) dans un mode initialisation
d. d'insertion d'au moins un élément de séparation (330) pour la formation d'au moins deux zones partielles (TB) vides
e. de fermeture du tiroir (501)
f. d'identification d'au moins un élément de séparation (330) posé
g. de mise en mémoire de la position d'au moins un élément de séparation (330)
h. de reproduction côté système de zones partielles logiques (TB) pour le stockage de produits en vrac (G)
i. d'association des émetteurs de signaux (21) et récepteurs de signaux (22) coopérant par paires au compartiment de stockage (R) et/ou à la zone partielle (TB)
j. de mise hors service du mode initialisation et de mise en mémoire des données acquises.

12. Procédé pour initialiser un dispositif de stockage (500) selon la revendication précédente **caractérisé en ce que** l'identification d'au moins un élément de séparation (330) posé s'effectue par mise en et hors service progressive des émetteurs de signaux (21) disposés sur une face frontale de l'élément de séparation (330) transversalement à celui-ci et évaluation des signaux (S) des récepteurs de signaux (22) opposés, du fait qu'un signal (S) émis peut être reçu, sans entrave par un élément de séparation (330), par plusieurs récepteurs de signaux (22) opposés et disposés les uns à côté des autres, mais lorsqu'un élément de séparation (330) est présent, uniquement au maximum par le récepteur de signal directement à l'opposé et s'appliquant sur l'élément de séparation, ce qui a pour effet qu'une frontière nette peut être établie sur la base des signaux (S) émis mais non reçus.

13. Procédé pour faire fonctionner un dispositif de stockage (500) selon l'une quelconque des revendications 3 à 12, avec les étapes :
a. d'ouverture d'au moins un tiroir (501)
b. de stockage ou de retrait du produit en vrac (G)
c. de fermeture du tiroir (501)
d. d'identification d'occupation dans le compartiment de surveillance (R) ou au moins dans la zone partielle (TB)
e. de détection du stock de produit en vrac (G) et éventuellement de mise à jour du stock
f. éventuellement de déclenchement d'un réapprovisionnement en cas de passage au-dessous d'une quantité minimale.

14. Procédé pour faire fonctionner un dispositif de stockage (500) selon la revendication précédente, **caractérisé en ce que** l'identification d'occupation s'effectue par activation des émetteurs de signaux (21) associés à un compartiment de surveillance (R) ou une zone partielle (TB) et interrogation des récepteurs de signaux (22), du fait qu'un signal (S) reçu est interprété comme un produit en vrac (G) manquant et un signal (S) non reçu ou uniquement très faible est interprété comme un produit en vrac (G) présent.

15. Procédé pour faire fonctionner un dispositif de stockage (500) selon l'une quelconque des revendications précédentes 13 à 14, **caractérisé en ce que** l'identification d'occupation est déclenchée par commutation du commutateur de tiroir (52)3 lors de la fermeture du tiroir (501).
